# EUROPEAN PATENT APPLICATION

(11) **EP 4 716 065 A1**
(43) Date of publication of application: **25.03.2026**
(21) Application number: 24807010.4
(22) Date of filing: 25.04.2024
(51) Int. Cl.: H02J 50/12, B60L 5/00, B60L 53/122, B60L 53/124, B60M 7/00, H02J 50/40, H02J 50/60, H02J 50/80

(54) **NON-CONTACT POWER SUPPLY DEVICE**

(30) Priority: 16.05.2023 JP 2023080774
(71) Applicant: DENSO CORPORATION, Kariya-city, Aichi 448-8661 (JP)
(72) Inventor: NAKAYASHIKI, Yusei, Kariya-city, Aichi 448-8661 (JP); TAKAHASHI, Masaya, Kariya-city, Aichi 448-8661 (JP); TAKAHASHI, Eisuke, Kariya-city, Aichi 448-8661 (JP); YAMAGUCHI, Nobuhisa, Kariya-city, Aichi 448-8661 (JP)
(74) Representative: TBK
(86) International application number: PCT/JP2024/016271
(87) International publication number: WO 2024/237056

(57) **Abstract**

A wireless power supply apparatus (10) includes a power transmission resonant circuit (42), a switching circuit (44), and a unit-control unit (46) that controls the switching circuit. The unit-control unit performs at least either of a first abnormality determination process for determining whether the wireless power supply apparatus is abnormal using a first detection value detected by a detecting unit in a non-resonant state, and a second abnormality determination process for determining whether the wireless power supply apparatus is abnormal using a second detection value detected by the detecting unit in a resonant state.

## Description

### [Cross-Reference to Related Application]

The present application is based on and claims the benefit of priority from Japanese Patent Application No. 2023-080774, filed on May 16, 2023, the description of which is incorporated herein by reference.

### [Technical Field]

The present disclosure relates to a wireless power supply apparatus.

### [Background Art]

PTL 1 discloses a technology in which a wireless power supply apparatus is determined to be faulty when an induced current flowing from the wireless power supply apparatus to a power reception coil that wirelessly receives power supply is equal to or less than a first threshold.

### [Citation List]

### [Patent Literature]

[PTL 1] JP 2022-076657 A

### [Summary]

However, power being unable to be received due to a fault being determined upon power reception is inconvenient. Therefore, a technology in which a fault is determined at an early stage is desired.

The present disclosure can be actualized according to the following aspect.

An aspect of the present disclosure provides a wireless power supply apparatus configured to wirelessly supply power to a power reception apparatus including a secondary coil. The wireless power supply apparatus includes: a power transmission resonant circuit that includes a primary coil capable of being magnetically coupled with the secondary coil and a primary capacitor; an alternating-current power supply that supplies alternating-current power at an operating frequency prescribed in advance to the power transmission resonant circuit; a switching circuit that switches a state of the power transmission resonant circuit between a resonant state and a non-resonant state; a detecting unit that directly or indirectly detects a current value of a current flowing to the primary coil; and a unit-control unit that controls the switching circuit. The unit-control unit performs at least either of a first abnormality determination process for determining whether the wireless power supply apparatus is abnormal using a first detection value detected by the detecting unit in the non-resonant state and a second abnormality determination process for determining whether the wireless power supply apparatus is abnormal using a second detection value detected by the detecting unit in the resonant state. In the first abnormality determination process, the unit-control unit performs a first determination step of determining whether the first detection value is outside a first reference range prescribed in advance, and performs a first abnormality determination step of determining that the wireless power supply apparatus is abnormal when determined that the first detection value is outside the first reference range at the first determination step. In the second abnormality determination process, the unit-control unit performs a second determination step of determining whether the second detection value is outside a second reference range prescribed in advance, and performs a second abnormality determination step of determining that the wireless power supply apparatus is abnormal when determined that the second detection value is outside the second reference range at the second determination step.

As a result of this aspect, in the wireless power supply apparatus, the wireless power supply apparatus can be determined to be abnormal by at least either of the first abnormality determination process and the second abnormality determination process being performed. Consequently, fault in the wireless power supply apparatus can be determined at an early stage.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is an overall configuration diagram illustrating a wireless power supply system according to a first embodiment;
Fig. 2 is a circuit diagram illustrating the wireless power supply system according to the first embodiment;
Fig. 3 is a flowchart illustrating a power supply sequence;
Fig. 4 is a flowchart illustrating an abnormality detection process according to the first embodiment;
Fig. 5 is a circuit diagram illustrating a wireless power supply system according to a second embodiment;
Fig. 6 is a diagram illustrating a first correspondence table between faults and changes in detection values according to the second embodiment;
Fig. 7 is a diagram illustrating a second correspondence table between faults and changes in detection values according to the second embodiment;
Fig. 8 is a diagram illustrating a current value of each coil in each state under normal conditions according to the second embodiment;
Fig. 9 is a flowchart illustrating an abnormality detection process according to the second embodiment;
Fig. 10 is a circuit diagram illustrating a wireless power supply system according to a third embodiment;
Fig. 11 is a diagram illustrating a current value of each coil in each state under normal conditions according to the third embodiment;
Fig. 12 is a diagram illustrating a first correspondence table between faults and changes in detection values according to the third embodiment;
Fig. 13 is a diagram illustrating a second correspondence table between faults and changes in detection values according to the third embodiment;
Fig. 14 is a diagram illustrating a third correspondence table between faults and changes in detection values according to the third embodiment,
Fig. 15 is a flowchart illustrating a first half of an abnormality detection process according to the third embodiment;
Fig. 16 is a flowchart illustrating a second half of the abnormality detection process according to the third embodiment;
Fig. 17 is a circuit diagram illustrating a wireless power supply system according to a fourth embodiment;
Fig. 18 is a diagram illustrating a first correspondence table between faults and changes in detection values according to the fourth embodiment;
Fig. 19 is a diagram illustrating a second correspondence table between faults and changes in detection values according to the fourth embodiment; and
Fig. 20 is a circuit diagram illustrating a wireless power supply system according to a fifth embodiment.

### [Description of Embodiments]

### A. First embodiment

### A1. Configuration of a wireless power supply system

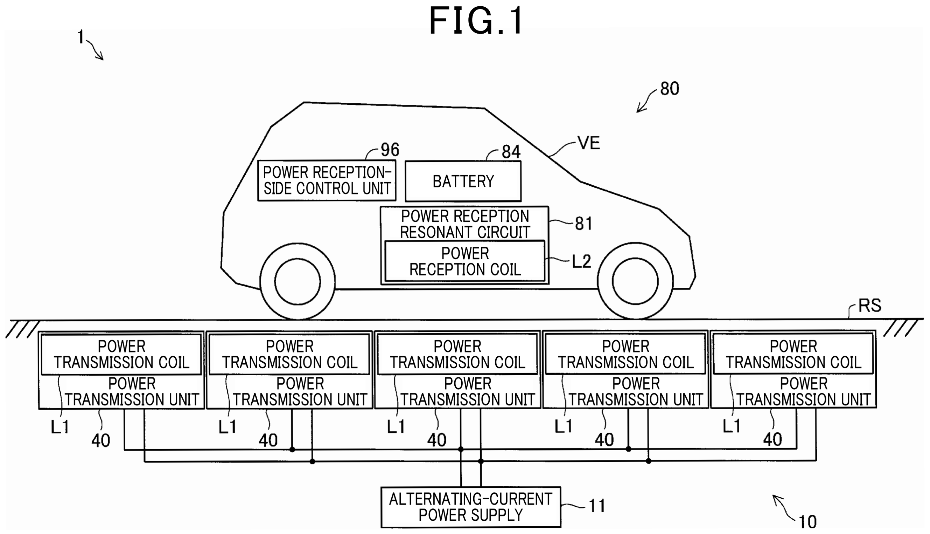

As shown in Fig. 1, a wireless power supply system 1 includes a wireless power supply apparatus 10 and a power reception apparatus 80. According to the present embodiment, the wireless power supply apparatus 10 is embedded under a road RS. The power reception apparatus 80 is mounted in a vehicle VE serving as a moving body that travels on the road RS. While the vehicle VE is traveling, the power reception apparatus 80 is supplied power from the wireless power supply apparatus 10. The term "while traveling" includes a case in which the vehicle VE is moving and a case in which the vehicle is stopped, such as while waiting for a traffic light to change. For example, the vehicle VE may be configured as an electric car or hybrid car.

The wireless power supply apparatus 10 includes a power transmission unit 40 that includes a power transmission coil L1 as a primary coil and an alternating-current power supply 11 that supplies power to the power transmission unit 40. The alternating-current power supply 11 supplies alternating-current power at an operating frequency prescribed in advance to a plurality of power transmission units 40. Specifically, the alternating-current power supply 11 includes a direct-current power supply that converts alternating-current power supplied from a grid power supply to direct-current power, and a direct-current/alternating-current (DC/AC) converter that converts the direct-current power supplied from the direct-current power supply to alternating-current power at the operating frequency. A plurality of power transmission coils L1 are arrayed along an extension direction of the road RS.

The moving body in which the power reception apparatus 80 is mounted is not limited to the vehicle VE that travels on the road RS and, for example, may be an automated guided vehicle (AGV) or a traveling robot. In addition, the power transmission unit 40 may be set in a sidewalk or a parking lot adjacent to the road RS, or on a path traveled by an AGV, rather than under the road RS. Furthermore, the configuration may be such that a single power transmission unit 40 is connected to the alternating-current power supply 11.

The power reception apparatus 80 includes a battery 84 serving as a load apparatus, a power reception resonant circuit 81 including a power reception coil L2 serving as a secondary coil, and a power reception-side control unit 96. The power reception coil L2 is capable of being magnetically coupled with the power transmission coil L1. According to the present embodiment, the power reception coil L2 is provided on an underside of the vehicle VE, in a position opposing the power transmission coil L1.

Power received by the power reception coil L2 is supplied to the battery 84. The battery 84 is a secondary battery charged by the direct-current power that has been supplied. The power charged in the battery 84 is used for drive power for travel and the like.

The power reception-side control unit 96 controls each section, such as the power reception resonant circuit 81, inside the power reception apparatus 80. The power reception-side control unit 96 is actualized to include an engine control unit (ECU). Here, the ECU may be actualized by a single microcontroller or may include a plurality of microcontrollers.

### A2. Circuit configuration of the wireless power supply system

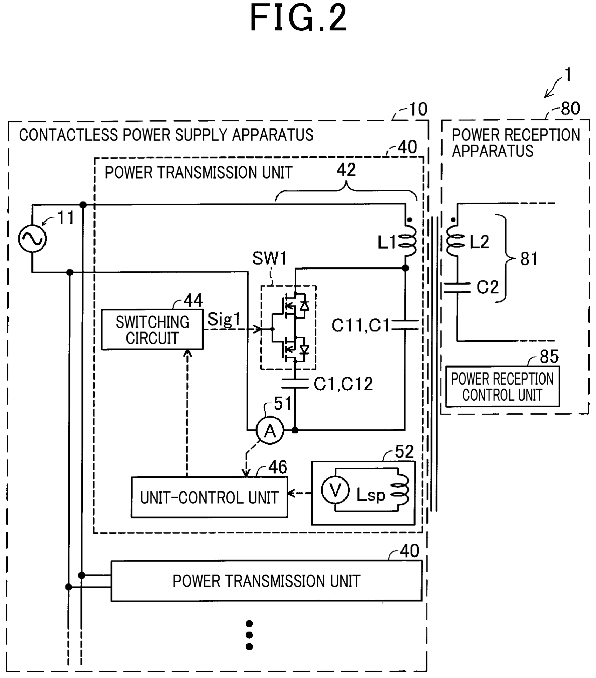

As shown in Fig. 2, in addition to the above-described configuration, the power transmission unit 40 includes a power transmission resonant circuit 42, a switching circuit 44, and a unit-control unit 46. The power transmission resonant circuit 42 includes the power transmission coil L1, a power transmission capacitor C1 serving as a primary capacitor, and a first switch SW1. The power transmission capacitor C1 provides a function of setting the power transmission resonant circuit 42 to a resonant state at the operating frequency and setting the power transmission resonant circuit 42 to a non-resonant state at the operating frequency. The power transmission capacitor C1 includes a first power transmission capacitor C11 and a second power transmission capacitor C12.

The switching circuit 44 switches the state of the power transmission resonant circuit 42 between the resonant state and the non-resonant state. The unit-control unit 46 controls the switching circuit 44. For example, the unit-control unit 46 may be implemented by a microcontroller. A program for an abnormality detection process, described hereafter, is stored in a memory of the unit-control unit 46.

The first power transmission capacitor C11 is connected in series to the power transmission coil L1. The second power transmission capacitor C12 is connected in series to the first switch SW1. In addition, a connection body of the second power transmission capacitor C12 and the first switch SW1 is connected in parallel to the first power transmission capacitor C11. The first switch SW1 is a bidirectional switch to which respective source terminals of two field effect transistors (FETs) are connected. A switching signal Sig1 output from the switching circuit 44 is input to gate terminals of the two FETs. An on/off state of the first switch SW1 is thereby controlled.

When a high-level switching signal Sig1 is input to the first switch SW1, the first switch SW1 is set to the on state, that is, a conducting state, and a current flows to the second power transmission capacitor C12. Here, a combined capacitance of the first power transmission capacitor C11 and the second power transmission capacitor C12, and an inductance of the power transmission coil L1 are set to values that result in the resonant state at the operating frequency when the power transmission coil L1 and the power reception coil L2 are magnetically coupled. As a result, when the first switch SW1 is set to the on state, the power transmission resonant circuit 42 is set to the resonant state as a result of the first power transmission capacitor C11, the second power transmission capacitor C12, and the power transmission coil L1. In contrast, when a low-level switching signal Sig1 is input to the first switch SW1, the first switch SW1 is set to the off state, that is, a non-conducting state. In addition, a resonant frequency of the resonant circuit formed by the first power transmission capacitor C11 and the power transmission coil L1 is shifted from the operating frequency. Therefore, the power transmission resonant circuit 42 is set to the non-resonant state.

The power transmission unit 40 further includes a first current sensor 51 serving as a detecting unit for directly or indirectly detecting a current value of a current flowing to the power transmission coil L1, and a magnetic sensor 52. According to the present embodiment, the first current sensor 51 directly detects the current value of the current flowing to the power transmission coil L1 and transmits a signal indicating the detected current value to the unit-control unit 46.

Here, indirectly detecting the current value of the current flowing to the power transmission coil L1 specifically means, for example, detecting a voltage value of the power transmission coil L1, a magnetic flux density near the power transmission coil L1, or a voltage of the first power transmission capacitor C11. As the current value of the current flowing to the power transmission coil L1 increases, the voltage value of the power transmission coil L1 increases. Therefore, the voltage value of the power transmission coil L1 can be converted to the current value of the current flowing through the power transmission coil L1. As the current value of the current flowing to the power transmission coil L1 increases, a current density near the power transmission coil L1 increases. Therefore, the magnetic flux density near the power transmission coil L1 can be converted to the current value of the current flowing through the power transmission coil L1. Thus, a voltage sensor that detects the voltage value of the power transmission coil L1 or a magnetic sensor that detects the magnetic flux density near the power transmission coil L1 may be used instead of the first current sensor 51 to detect the current value of the power transmission coil L1, that is, as a detecting unit.

The magnetic sensor 52 includes therein a detection coil Lsp. The detection coil Lsp is disposed near the power transmission coil L1. The magnetic sensor 52 detects the magnetic flux density near the power transmission coil L1 and transmits a detection value indicating the detected magnetic flux density to the unit-control unit 46. According to the present embodiment, the magnetic sensor 52 includes therein a voltage sensor that detects a voltage induced in the detection coil Lsp. As the detected magnetic flux density increases, the voltage value detected by the magnetic sensor 52 increases.

The power reception apparatus 80 includes a power reception resonant circuit 81 that is a series resonant circuit including the power reception coil L2 and a power reception capacitor C2.

### A3. Power supply sequence

The power transmission coils L1 are arranged in the extension direction of the road RS. The power reception coil L2 wirelessly receives power supply from the nearest power transmission coil L1. The power transmission unit 40 is set to either of a standby state and a power supply state. Specifically, when setting the standby state, the unit-control unit 46 issues a command to the switching circuit 44, and sets the first switch SW1 to the off state and sets the power transmission resonant circuit 42 to the non-resonant state. In contrast, when setting the power supply state, the unit-control unit 46 issues a command to the switching circuit 44, and sets the first switch SW1 to the on state and sets the power transmission resonant circuit 42 to the resonant state. A standby current flowing to the power transmission coil L1 in the standby state is smaller than a power supply current flowing to the power transmission coil L1 in the power supply state.

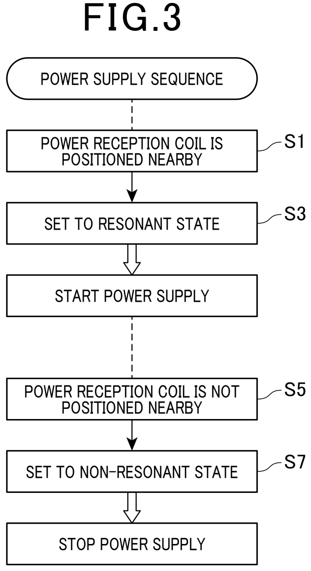

The power transmission unit 40 is set to the standby state at startup. Then, when approach of the power reception coil L2 is detected, the power transmission unit 40 is switched from the standby state to the power supply state and supplies power to the power reception coil L2. A power supply sequence indicating details of the switching between the standby state and the power supply state will be described with reference to Fig. 3.

The power transmission unit 40 is set to the standby state at startup. In the standby state, the power transmission unit 40 sends the standby current to the power transmission coil L1 and generates magnetic flux from the power transmission coil L1. When the power reception coil L2 approaches the power transmission coil L1, the power reception apparatus 80 detects the magnetic flux generated by the power transmission coil L1 using a secondary-side detection circuit (not shown). When the magnetic flux generated by the power transmission coil L1 is detected, the power reception apparatus 80 generates a starting magnetic flux. Specifically, the power reception apparatus 80 applies alternating-current power to a magnetic flux generation coil, (not shown). As a result, the magnetic flux generation coil generates a magnetic flux. The detection value of the magnetic sensor 52 increases as a result of the generated magnetic flux and becomes greater than a reference value prescribed in advance.

When the detection value of the magnetic sensor 52 becomes greater than a first reference value, the unit-control unit 46 determines that the power reception coil L2 is positioned near the power transmission coil L1. In contrast, when the detection value of the magnetic sensor 52 becomes equal to or less than a second reference value, the unit-control unit 46 determines that the power reception coil L2 is not positioned near the power transmission coil L1. Here, the first reference value and the second reference value may be same values or differing values. In the description below, a case in which the unit-control unit 46 determines that the power reception coil L2 is positioned near the power transmission coil L1 may be simply described as "when the power reception coil L2 approaches." A case in which the unit-control unit 46 determines that the power reception coil L2 is not positioned near the power transmission coil L1 may be simply described as "when the power reception coil L2 separates."

When determined that the power reception coil L2 is positioned near the power transmission coil L1 at step S1 in Fig. 3, at step S3, the unit-control unit 46 sets the power transmission resonant circuit 42 to the resonant state. Specifically, the unit-control unit 46 issues a command to the switching circuit 44 and switches the first switch SW1 from the off state to the on state using the switching signal Sig1. When the power transmission coil L1 and the power reception coil L2 are magnetically coupled, a resonant frequency of the power transmission resonant circuit 42 and a resonant frequency of the power reception resonant circuit 81 are set to be substantially the same. As a result, power can be wirelessly supplied to the power reception coil L2 through resonant coupling of the magnetic fields of the power transmission coil L1 and the power reception coil L2.

At step S5, the unit-control unit 46 determines that the power reception coil L2 is not positioned near the transmission coil L1, and sets the power transmission resonant circuit 42 to the non-resonant state. Specifically, the unit-control unit 46 issues a command to the switching circuit 44, and switches the first switch SW1 from the on state to the off state using the switching signal Sig1. As a result, power supply is stopped and the power transmission unit 40 is set to the standby state.

### A4. Abnormality detection process

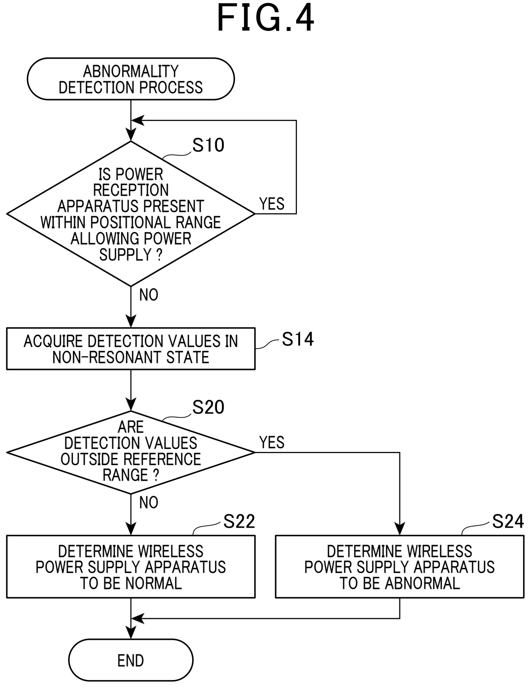

After the power transmission unit 40 is started, the unit-control unit 46 starts the abnormality detection process shown in Fig. 4. At step S10, the unit-control unit 46 determines whether the power reception apparatus 80 is present within a positional range allowing power supply. Specifically, the unit-control unit 46 determines that the power reception apparatus 80 is not present within the range allowing power supply when the detection value of the magnetic sensor 52 is equal to or less than the first reference value prescribed in advance. In contrast, the unit-control unit 46 determines that the power reception apparatus 80 is present within the range allowing power supply when the detection value of the magnetic sensor 52 is greater than the first reference value. Determination regarding whether an abnormality has occurred is made in a state in which the power reception coil L2 is not present in the positional range allowing power supply. Therefore, when determined that the power reception apparatus 80 is present within the positional range allowing power supply at step S10, the unit-control unit 46 repeatedly performs step S10 until determined that the power reception apparatus 80 is not present.

When determined that the power reception apparatus 80 is not present within the range allowing power supply at step S10, at step S14, the unit-control unit 46 acquires the detection value of the first current sensor 51. Here, the state of the power transmission unit 40 remains unchanged from the non-resonant state. Therefore, the detection value of the first current sensor 51 acquired at step S14 is, in other words, a detection value in the non-resonant state.

At step S20, the unit-control unit 46 determines whether the acquired current value is outside a reference range prescribed in advance. Specifically, the reference range is a range equal to and below a reference value prescribed in advance. Then, when acquired current value is greater than the reference value, the unit-control unit 46 determines that the acquired current value is outside the reference range. Meanwhile, when the acquired detection value is equal to or less than the reference value, the unit-control unit 46 determines that the acquired detection value is not outside the reference range, that is, is within the reference range.

The power transmission unit 40 is set to the standby state. Therefore, under normal conditions in which the power transmission resonant circuit 42 is not faulty, the standby current flows to the power transmission coil L1. Thus, when the current flowing to the power transmission coil L1 is greater than that under normal conditions, the power transmission resonant circuit 42 can be determined to be faulty. As the fault in this case, specifically, a short-circuit fault in the first switch SW1 and a short-circuit fault in the first power transmission capacitor C11 can be considered. Here, the short-circuit fault is a fault that results in a continuously conducting state. Such a fault leads to unnecessary generation of magnetic flux from the power transmission coil L1. Therefore, early detection is preferable.

The reference value used at step S20 is a value greater than the standby current under normal conditions and is prescribed in advance through experiments and the like.

When determined that the detection value is not outside the reference range at step S20, at step S22, the unit-control unit 46 determines that the power transmission unit 40 is normal and sets the power transmission unit 40 to a power supply permitted state. The power supply permitted state is a state in which the power supply sequence can be performed. Meanwhile, when determined that the detection value is outside the reference range at step S20, at step S24, the unit-control unit 46 determines that the power transmission unit 40 is abnormal and sets the power transmission unit 40 to a power supply prohibited state. The power supply prohibited state is a state in which the power supply sequence cannot be performed. In the power supply prohibited state, the power transmission unit 40 is set to the standby state at all times. The unit-control unit 46 ends the present processing sequence after performing step S22 and after performing step S24.

The detection values acquired by the unit-control unit 46 at step S14 are also referred to as a first detection value. Step S20 is also referred to as a first determination step. Step S24 is also referred to as a first abnormality determination step. Step S20 and step S24 together are also referred to as a first abnormality determination process.

According to the first embodiment described above, the unit-control unit 46 acquires the detection value in the non-resonant state at step S14, and determines whether the wireless power supply apparatus 10 is abnormal, that is, whether the wireless power supply apparatus 10 is faulty by determining whether the detection value is outside the reference range at step S20. Therefore, whether the wireless power supply apparatus 10 is faulty can be determined beforehand, at a time other than a power supply operation. A fault in the wireless power supply apparatus 10 can be determined at an early stage.

In addition, the unit-control unit 46 performs the abnormality detection process at startup, that is, before switching from the standby state to the power supply state after startup. As a result, switching from the standby state to the power supply state in a state in which the wireless power supply apparatus 10 is faulty can be prevented.

### B. Second embodiment

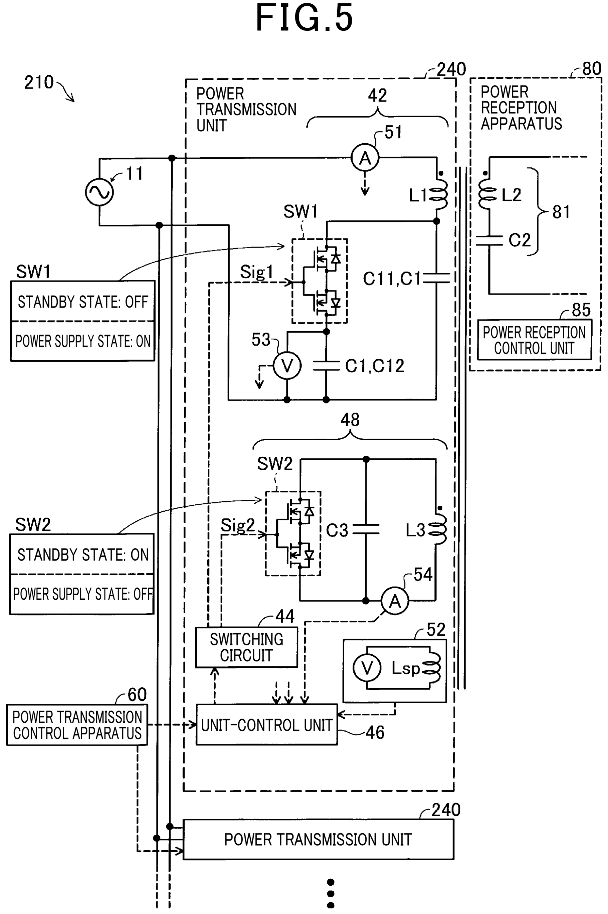

A wireless power supply unit 210 according to a present embodiment shown in Fig. 5 differs from that according to the above-described first embodiment in that a power transmission control apparatus 60 is provided, and in terms of a circuit configuration of a power transmission unit 240 and processing content of the abnormality detection process. Identical configurations and identical processing steps as those according to the above-described first embodiment are given the same reference numbers. Detailed descriptions thereof are omitted as appropriate.

### B1. Circuit configuration of the wireless power supply system

As shown in Fig. 5, the power transmission unit 240 includes a coupling circuit 48. The coupling circuit 48 is used to form or break a power transmission path between the power transmission unit 240 and the power reception apparatus 80. The coupling circuit 48 includes a tertiary coil L3, a tertiary capacitor C3, and a second switch SW2. The tertiary capacitor C3 and the second switch SW2 are connected in parallel to the tertiary coil L3. The second switch SW2 is a bidirectional switch similar to the first switch SW1. The tertiary coil L3 is disposed in a position allowing magnetic coupling with the transmission coil L1. As a result, when the power transmission coil L1 and the power reception coil L2 are magnetically coupled, the power transmission coil L1, the power reception coil L2, and the tertiary coil L3 are magnetically coupled to one another.

A capacitance value of the tertiary capacitor C3 is set to a value at which a parallel resonant circuit formed by the tertiary coil L3 and the tertiary capacitor C3 is in the resonant state when the power transmission coil L1, the power reception coil L2, and the tertiary coil L3 are magnetically coupled to one another.

The power reception apparatus 80 is mounted in a moving vehicle in a manner similar to that according to the first embodiment. When the power reception coil L2 approaches the power transmission coil L1, the unit-control unit 46 switches the power transmission resonant circuit 42 and the coupling circuit 48 from the non-resonant state to the resonant state, and switches the power transmission unit 40 from the standby state to the power supply state. Specifically, the switching circuit 44 switches the first switch SW1 from the off state to the on state and the second switch SW2 from the on state to the off state, as described above. When the second switch SW2 is switched to the off state, the parallel resonant circuit formed by the tertiary coil L3 and the tertiary capacitor C3 enters the resonant state. As a result, the power supply current flows to the power transmission coil L1 and power is wirelessly supplied to the power reception coil L2.

In contrast, when the power reception coil L2 separates, the unit-control unit 46 switches the power transmission resonant circuit 42 and the coupling circuit 48 from the resonant state to the non-resonant state, and switches the power transmission unit 40 from the power supply state to the standby state. Specifically, the switching circuit 44 switches the first switch SW1 from the on state to the off state and the second switch SW2 from the off state to the on state, as described above. When the second switch SW2 is switched to the on state, both terminals of the tertiary coil L3 are shorted, and therefore, the coupling circuit 48 enters the non-resonant state. As a result, the power transmission unit 40 is switched to the standby state in which a standby current that is smaller than the power supply current flows to the power transmission coil L1.

The power transmission coils L1 are arranged in an array. The power reception coil L2 is supplied power from a nearest power transmission coil L1 among the power transmission coils L1 in the array. That is, the plurality of power transmission coils L1 in the array are sequentially switched from the standby state to the power supply state, in the order of placement. Therefore, a case may arise in which the magnetic flux generated by the power transmission coil L1 of the power transmission unit 40 set to the power supply state penetrates the power transmission coil L1 of an adjacent power transmission unit 40 set to the standby state. Here, the standby current flowing to the power transmission coil L1 can be reduced by the coupling circuit 48 being set to the non-resonant state.

In addition, in the standby state, the coupling circuit 48 also functions as a magnetic sensor for detecting the approach of the power reception coil L2. In the standby state, the second switch SW2 is set to the on state. Therefore, a current induced in the tertiary coil L3 flows through the second switch SW2 that is in the conducting state. The current flowing to the tertiary coil L3 can be detected by a second current sensor 54, described hereafter. According to the first embodiment, the magnetic sensor 52 is used at step S1 in Fig. 3 in the power supply sequence. In contrast, according to the present embodiment, the approach of the power reception coil L2 in the power supply sequence is performed using the second current sensor 54. The separation of the power reception coil L2 in the power supply sequence is performed using the first current sensor 51. Here, according to the present embodiment, the approach and separation of the power reception coil L2 may be performed using the magnetic sensor 52, in a manner similar to the first embodiment. As described hereafter, the detection value of the second current sensor 54 is used in the abnormality detection process. That is, the second current sensor 54 for detecting the approach of the power reception coil L2 can be used in the abnormality detection process. Therefore, the abnormality detection process can be performed without a new sensor being added.

In addition to the first current sensor 51 and the magnetic sensor 52, the power transmission unit 240 includes a voltage sensor 53 and the second current sensor 54. The voltage sensor 53 detects a voltage value of the second power transmission capacitor C12 and transmits a signal indicating the detected voltage value to the unit-control unit 46. The second current sensor 54 directly detects the current value of the current flowing to the tertiary coil L3 and transmits a signal indicating the detected current value to the unit-control unit 46. According to the present embodiment, the voltage sensor 53, the second current sensor 54, the second current sensor 54, and the magnetic sensor 52 are used in the abnormality detection process, in addition to the first current sensor 51. The current value detected by the first current sensor 51, the voltage value detected by the magnetic sensor 52, the voltage value detected by the voltage sensor 53, and the current value detected by the second current sensor 54 are collectively referred to as detection values.

The power transmission control apparatus 60 is capable of communicating with each power transmission unit 204. Specifically, the power transmission control apparatus 60 is capable of communicating with the unit-control unit 46. For example, the power transmission control apparatus 60 may be implemented by including a microcontroller.

### B2. Overview of the abnormality determination process

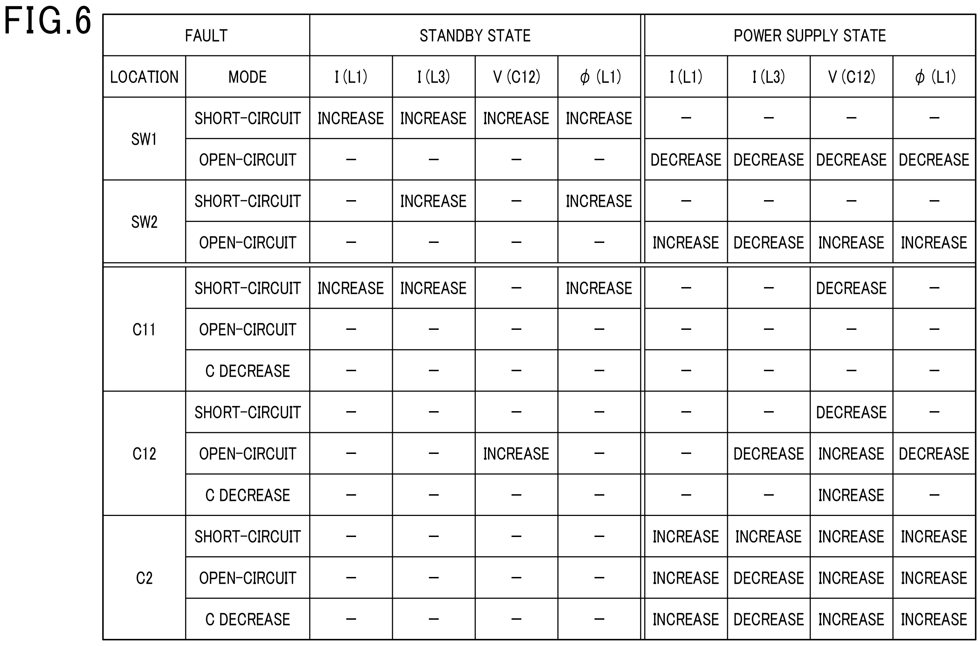

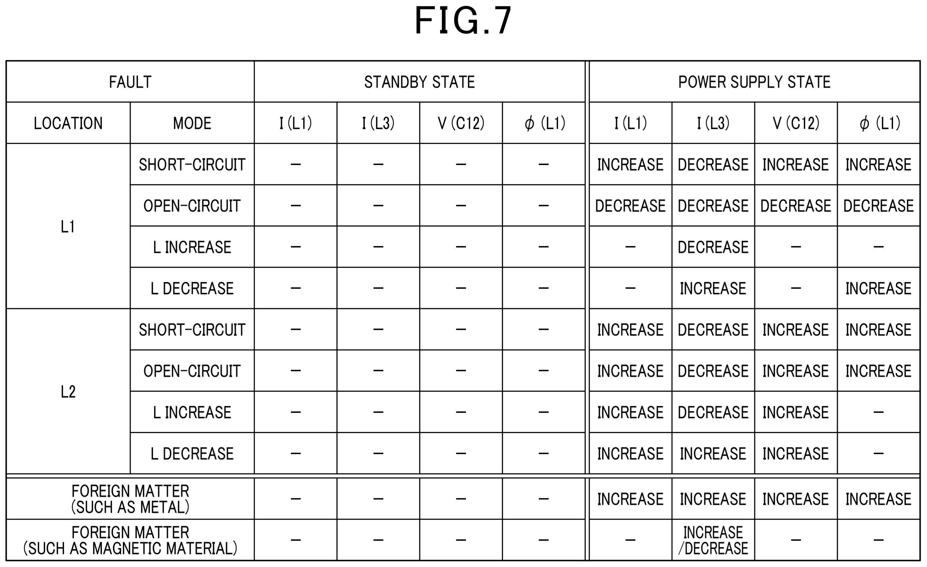

Fig. 6 and Fig. 7 are tables summarizing fault locations and changes in the detection values. Specifically, a change in the detection value indicates a change in the detection value under abnormal conditions relative to the detection value under normal conditions. "Increase" in the table indicates that the detection value under abnormal conditions in which a fault has occurred is greater relative to that under normal conditions in which a fault has not occurred. "Decrease" in the table indicates that the detection value is smaller relative to that under normal conditions. "-" in the table indicates that no changes have occurred or an amount of change is small relative to that under normal conditions. In addition, "I(L1)" in the table indicates the current value of the first current sensor 51. I(L3)" in the table indicates the current value of the second current sensor 54. "V(C12)" in the table indicates the voltage value of the voltage sensor 53. "φ(L1)" in the table indicates the magnetic flux density indicated by the voltage value of the magnetic sensor 52.

According to the present embodiment, the coupling circuit 48 is provided in addition to the power transmission resonant circuit 42. Therefore, the description will be given using the standby state and the power supply state of the power transmission unit 240 instead of the states of the resonant state and the non-resonant state of the power transmission resonant circuit 42. Here, correspondence between the respective states of the resonant state and the non-resonant state of the power transmission resonant circuit 42 and the coupling circuit 48, and the standby state and the power supply state of the power transmission unit 240 is as described above.

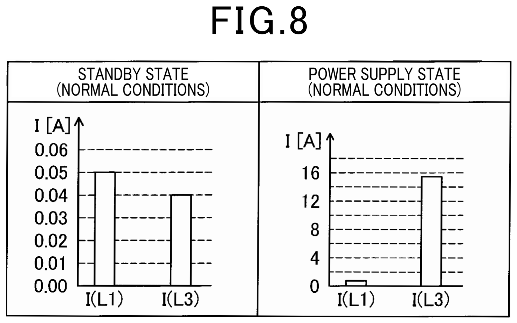

In the standby state, both the power transmission resonant circuit 42 and the coupling circuit 48 are set to the non-resonant state. Therefore, as shown in Fig. 8, both the current flowing to the power transmission coil L1 and the current flowing to the tertiary coil L3 are small. In the power supply state, both the power transmission resonant circuit 42 and the coupling circuit 48 are set to the resonant state. Even under normal conditions, the current value flowing to the power transmission coil L1 differs from the current value flowing to the tertiary coil L3. In addition, regarding the power transmission coil L1, the current value in the standby state and the current value in the power supply state differ. Therefore, the reference value used in the abnormality detection process is set for each combination of the detection values and the states of the standby state and the power supply state.

An example of changes in the detection values in a case in which no faults have occurred in circuit elements excluding the first switch SW1, and the first switch SW1 has a short-circuit fault will be described. As shown in Fig. 6, when the first switch SW1 has a short-circuit fault, in the standby state, the current value of the first current sensor 51, the voltage value of the voltage sensor 53, the current value of the second current sensor 54, and the detection value of the magnetic sensor 52 all increase relative to that under normal conditions.

In the standby state, the first switch SW1 is set to the off state. Therefore, under normal conditions, a standby current that is smaller than that in the power supply state flows to the power transmission coil L1, as described above. However, when the first switch SW1 has a short-circuit fault, the state of the power transmission resonant circuit 42 is a state substantially identical to the power supply state. Therefore, a current that is about the same as the power supply current flows to the power transmission coil L1, and the detection value of the first current sensor 51 increases. Then, as a result of the current flowing to the power transmission coil L1 increasing, the current flowing to the magnetically coupled tertiary coil L3 also increases. Consequently, the second current sensor 54 detection value increases. The current flowing to the second power transmission capacitor C12 that is connected in series to the power transmission coil L1 also increases. Therefore, the detection value of the voltage sensor 53 also increases. As the current flowing to the power transmission coil L1 increases, the current flowing to the magnetically coupled detection coil Lsp also increases. Consequently, the detection value of the magnetic sensor 52 also increases.

In contrast, in the power supply state, the detection values do not significantly vary even if the first switch SW1 has a short-circuit fault. A reason for this is, because the first switch SW1 is set to the on state during the power supply state, no significant differences from when the first switch SW1 has a short-circuit fault occur.

In a case in which the first switch SW1 has an open-circuit fault, in the power supply state, the state of the power transmission resonant circuit 42 is substantially the same as the standby state under normal conditions. Therefore, the current value of the first current sensor 51, the voltage value of the voltage sensor 53, the current value of the second current sensor 54, and the magnetic flux density of the magnetic sensor 52 all decrease relative to those under normal conditions. In contrast, when the first switch SW1 has an open-circuit fault, because the first switch SW1 is set to the off state in the standby state, no significant differences from when the first switch SW1 has an open-circuit fault occur.

As described above, through use of the detection values in the power supply state, in addition to those in the standby state, faults that cannot be detected by the standby state alone can be detected. In addition, through comparison of the changes in the detection values in the standby state and the changes in the detection values in the power supply state, identification of a faulty circuit element and identification of a fault mode, such as a short-circuit fault or an open-circuit fault, can be made.

In Fig. 6, "C decrease" indicates a decrease in the capacitance value of the capacitor. In Fig. 7, "L increase" indicates an increase in the inductance of the coil. In Fig. 7, "L decrease" indicates a decrease in the inductance of the coil. In Fig. 7, "Foreign matter (such as metal)" and "Foreign matter (such as magnetic material)" will be described hereafter.

### B3. Details of the abnormality detection process

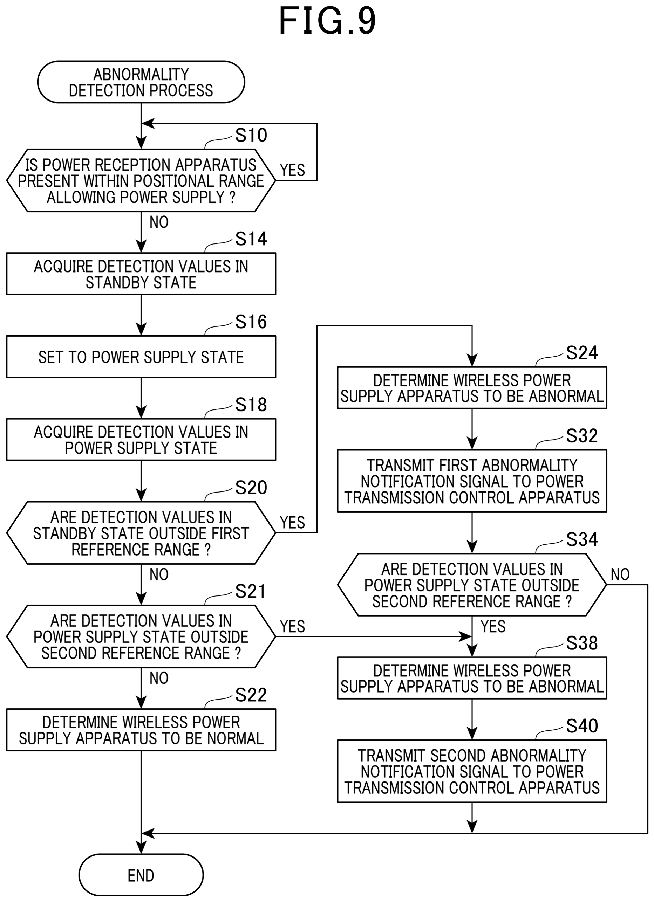

As shown in Fig. 9, when determined that the power reception apparatus 80 is not present within the positional range allowing power supply at step S10, the unit-control unit 4 advances the process to step S14. When the power reception coil L2 is present within a positional range allowing magnetic coupling with the power transmission coil L1, the current value flowing to the power transmission coil L1 varies depending on a degree of coupling between the power transmission coil L1 and the power reception coil L2. Therefore, as a result of the determination regarding whether an abnormality has occurred being performed when the power reception apparatus 80 is determined to not be present within the positional range allowing power supply, determination regarding whether an abnormality has occurred can be accurately performed.

At step S14, the unit-control unit 46 acquires the detection values in the standby state and stores the acquired detection values in a memory provided therein. Here, the detection values refer to the current value of the first current sensor 51, the voltage value of the voltage sensor 53, the current value of the second current sensor 54, and the voltage value of the magnetic sensor 52. At step 16, the unit-control unit 46 sets the power transmission unit 240 to the power supply state. At step S18, the unit-control unit 46 acquires the detection values and stores the acquired detection values in the memory provided therein.

At step S20, whether the detection values in the standby state are outside a first reference range is determined. The first reference range is a reference range for determining whether the detection value in the standby state is abnormal. In contrast, a second reference range at subsequent step S21 is a reference range for determining whether the detection value in the power supply state is abnormal. The first reference range and the second reference ranges are also collectively referred to as the reference ranges.

Specifically, step S20 is performed by the detection value being compared to a lower-limit reference value and an upper-limit reference value prescribed in advance, for each of the four detection values. When the detection value is less than the lower-limit reference value and when the detection value is greater than the upper-limit reference value, the detection value is determined to be outside the first reference range. In contrast, when the detection value is equal to or greater than the lower-limit reference value, and equal to or less than the upper-limit reference value, the detection value is determined to not be outside the first reference range, that is, to be within the first reference range.

Here, the detection value being less than the lower-limit reference value corresponds to "decrease" in Fig. 6 and Fig. 7. The detection value being greater than the upper-limit reference value corresponds to "increase" in Fig. 6 and Fig. 7. The detection value being equal to or greater than the lower-limit reference value and equal to or less than the upper-limit reference value corresponds to "-" in Fig. 6 and Fig. 7.

As a result of determining whether the detection value is outside the first reference range for each of the four detection values, when determined that at least one of the four detection values is outside the first reference range, at step S20, the unit-control unit 46 determines that the detection values are outside the first reference range. In contrast, when all four detection values are not outside the first reference range, that is, are within the first reference range, at step S20, the unit-control unit 46 determines that the detection values are not outside the first reference range.

When determined that the detection values in the standby state are not outside the first reference range at step S20, at step S21, the unit-control unit 46 determines whether the detection values in the power supply state are within the second reference range. Specifically, in a manner similar to that at step S20, the detection value is compared to the second reference range, for each of the four detection values. When at least one of the four detection values is outside the second reference range, at step S21, the detection values are determined to be outside the second reference range. Meanwhile, when, upon comparison of the detection values to the second reference range, all four detection values are not outside the second reference range, that is, are within the second reference range, at step S21, the unit-control unit 46 determines that the detection values are not outside the second reference range.

When determined that the detection values in the power supply state are not outside the second reference range at step S21, because the detection values are within the reference ranges in both the standby state and the power supply state, at step S22, the unit-control unit 46 determines that the power transmission unit 40 is normal, sets the power transmission unit 40 to the power supply permitted state, and ends the present processing routine.

When determined that the detection values in the power supply state are outside the second reference range at step S21, because the detection values in the standby state are outside the first reference range and are abnormal, the unit-control unit 46 advances the process to step S38.

When determined that the detection values in the standby state are outside the first reference range at step S20, at step S24, the unit-control unit 46 determines that an abnormality has occurred and sets the power transmission unit 240 to the power supply prohibited state. At step S32, the unit-control unit 46 transmits a first abnormality notification signal indicating that an abnormality has been determined in the standby state to the power transmission control apparatus 60.

At step S34, in a manner similar to that at step S21, the unit-control unit 46 determines whether the detection values in the power supply state are outside the second reference range. When determined that the detection values in the power supply state are not outside the second reference range, the unit-control unit 46 ends the present processing routine. In contrast, when determined that the detection values in the power supply state are outside the second reference range, at step S38, the unit-control unit 46 determines that an abnormality has occurred and sets the power transmission unit 240 to the power supply prohibited state. At step S40, the unit-control unit 46 transmits a second abnormality notification signal indicating that an abnormality is determined to have occurred in the power supply state to the power transmission control apparatus 60, sets the power transmission unit 240 to the power supply prohibited state, and subsequently ends the present processing routine.

The detection values acquired by the unit-control unit 46 at step S18 is also referred to as a second detection value. Step S21 and step S34 are also referred to as a second determination step. Step S38 is also referred to as a second abnormality determination step. Step S34 and step S38 together are also referred to as a second abnormality determination process. Step S10 is also referred to as a power reception apparatus determination step.

According to the second embodiment described above, effects similar to those according to the above-described first embodiment are achieved. In addition, when determined that an abnormality has occurred at step S24, at step S32, the unit-control unit 46 transmits the first abnormality notification signal to the power transmission control apparatus 60. When determined that an abnormality has occurred at step S38, at step S40, the unit-control unit 46 transmits the second abnormality notification signal to the power transmission control apparatus 60. As a result, when at least either of the first abnormality notification signal and the second abnormality notification signal has been received, the power transmission control apparatus 60 can perform a process in response. As the process in response, for example, power supply from the alternating-current power supply 11 to the power transmission unit 240 can be stopped. As a result, for example, a secondary fault due to the power transmission unit 240 generating magnetic flux can be suppressed. In addition, as the process in response, for example, a manager of the wireless power supply apparatus 10 can be prompted to repair the fault.

Furthermore, when determined that the power transmission apparatus 80 is not positioned within the positional range allowing wireless power supply at step S10, the unit-control unit 46 performs step S20 and step S34 in which the detection values are compared to the reference ranges. As a result, determination regarding whether an abnormality has occurred can be accurately performed.

### C. Another example 1 according to the second embodiment

According to the present embodiment, after step S24 in Fig. 9, the unit-control unit 46 performs a fourth determination step to determine whether the detection value of the voltage sensor 53 is outside a first reference voltage range prescribed in advance, a fifth determination step to determine whether the detection value of the second current sensor 54 is outside a first reference current range prescribed in advance, and a sixth determination step to determine whether the detection value of the magnetic sensor 52 is outside a first reference magnetic-flux range prescribed in advance. Subsequently, when determined that the detection value of the voltage sensor 53 is outside the first reference voltage range at the fourth determination step, when determined that the detection value of the second current sensor 54 is outside the first reference current range at the fifth determination step, and when determined that the detection value of the magnetic sensor 52 is outside the first reference magnetic-flux range at the sixth determination step, the unit-control unit 46 determines that the first switch SW1 has a short-circuit fault. As a result of this example, the fault can be identified as a short-circuit fault of the first switch SW1.

Here, the first reference voltage range, the first reference current range, and the first reference voltage range are prescribed in advance through experiments and the like.

In addition, when determined that the first switch SW1 has a short-circuit fault, the unit-control unit 46 may transmit a notification signal indicating that the first switch SW1 has a short-circuit fault to the power transmission control apparatus 60. As a result of the notification signal being transmitted, for example, the manager of the wireless power supply 10 can repair the wireless power supply 10 at an early stage because the fault location is identified in advance.

### D. Other example 2 according to the second embodiment

According to the present embodiment, after step S38, the unit-control unit 46 performs a seventh determination step to determine whether the detection value of the voltage sensor 53 is outside a second reference voltage range, an eighth determination step to determine whether the detection value of the current sensor 54 is outside a second reference current range, and a ninth determination step to determine whether the detection value of the magnetic sensor 52 is outside a second reference magnetic-flux range. Subsequently, when determined that the detection value of the voltage sensor 53 is outside the second reference voltage range at the seventh determination step, when determined that the detection value of the second current sensor 54 is outside the second reference current range at the eighth determination step, and when determined that the detection value of the magnetic sensor 52 is outside the second reference magnetic-flux range at the ninth determination step, the unit-control unit 46 determines that the power transmission resonant circuit 42 is faulty. As a result of this example, the power transmission resonant circuit 42 can be identified as being faulty. Effects similar to those according to "Other example 1 according the second embodiment" above can be achieved by the fault location being identified.

### E. Other example 3 according to the second embodiment

The present embodiment handles "foreign matter (such as metal)" and "foreign matter (such as magnetic material)" in Fig. 7. When foreign matter, such as metals or magnetic materials, is attached near the power transmission coil L1, the inductance of the power transmission coil L1 and the inductance of the tertiary coil L3 magnetically coupled with the power transmission coil L1 change. Therefore, the detection values in the power supply state change.

However, the attachment of foreign matter results in a smaller amount of change in the detection values than a fault in a circuit element. Therefore, according to the present embodiment, the fault is determined to be caused by foreign matter when the amount of change in the detection values is relatively small and the fault is determined to be in the circuit element when the amount of change in the detection values is relatively large. Specifically, the second reference range at step 21 and step S34 in Fig. 9 is used to determine whether the failure is due to foreign matter. In addition, a circuit reference range that has a greater range than outside the second reference range is used to determine whether the fault is in the circuit element.

When determined that the detection values are outside the second reference range at step S34, the unit-control unit 46 performs a third determination step to determine whether the detection values are outside the circuit reference range that has a greater range than outside the second reference range. Subsequently, when determined that the detection values are outside the circuit reference range at the third determination step, the unit-control unit 46 determines that the fault is a circuit abnormality in which an abnormality has occurred in a circuit provided in the wireless power supply apparatus 210. In contrast, when determined that the detection values are not outside the circuit reference range at the third determination step, the unit-control unit 46 determines that the fault is a foreign matter abnormality in which foreign matter is attached to the wireless power supply apparatus 210.

As a result of this example, whether the cause of the fault is a circuit element or foreign matter can be distinguished. Effects similar to those according to "Other example 1 according to the second embodiment" above can be achieved by whether the fault location is the circuit element or foreign matter being identified.

In Fig. 7, "Increase/decrease" indicates that the current value may increase or decrease relative to that under normal conditions, depending on a magnitude relationship with the inductances of the power transmission coil L1 and power reception coil L2.

### F. Third embodiment

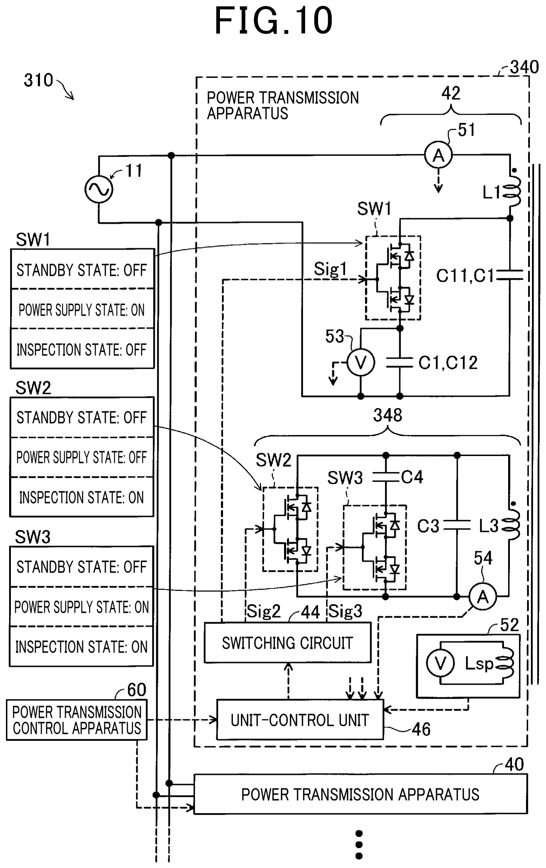

In a power transmission unit 340 according to a present embodiment shown in Fig. 10, a circuit configuration of a coupling circuit 348 differs from that of the coupling circuit 48 according to the second embodiment. In addition, processing content of the abnormality determination process differs from that according to the second embodiment. Identical configurations and identical processing steps as those according to the above-described embodiments are given the same reference numbers. Detailed descriptions thereof are omitted as appropriate.

### F1. Circuit configuration of the wireless power supply apparatus

The coupling circuit 348 according to the present embodiment further includes an additional capacitor C4 and a third switch SW3 in the coupling circuit 48 according to the second embodiment. The additional capacitor C4 and the third switch SW3 function in a manner similar to the first switch SW1 and the second power transmission capacitor C12 of the power transmission resonant circuit 42. That is, the additional capacitor C4 is connected in series to the third switch SW3. A connection body of the additional capacitor C4 and the third switch SW3 is connected in parallel to the tertiary capacitor C3. A capacitance value of an LC parallel resonant circuit including the tertiary coil L3 is changed by a state of the third switch SW3 being switched between the off state and the on state. Specifically, when the coupling circuit 348 is set to the resonant state, the second switch SW2 is set to the off state and the third switch SW3 is set to the on state. In contrast, when the coupling circuit 348 is set to the non-resonant state, the second switch SW2 is set to the off state and the third switch SW3 is set to the off state. In the coupling circuit 348, the non-resonant state can be set using the third switch SW3, in addition to the second switch SW2. Therefore, for example, even in a case in which an open-circuit fault in which the second switch SW2 is in the off state at all times occurs, a tertiary resonant circuit 938 can be set to the non-resonant state using the third switch SW3.

In addition, according to the present embodiment, the power transmission control apparatus 60 is capable of communicating with the power reception-side control unit 96 (Fig. 5) of the power reception unit 80.

### F2. Overview of the abnormality detection process

According to the present embodiment, when the abnormality determination process is performed, the detection values when the power transmission unit 340 is set to an inspection state are used in addition to the respective detection values when the transmission unit 340 is set to the standby state and the power supply state. The inspection state is a state that is not set in the power supply sequence. A fault in the third switch SW3 can be detected as described in detail hereafter through use of the detection values in the inspection state.

As shown in Fig. 10, when the power transmission unit 340 is set to the standby state, the first switch SW1, second switch SW2, and third switch SW3 are all set to the off state. When the power transmission unit 340 is set to the power supply state, the first switch SW1 and the third switch SW3 are set to the on state, and the second switch SW2 is set to the off state. When the power transmission unit 340 is set to the inspection state, the first switch SW1 is set to the off state, and the second switch SW2 and the third switch SW3 are set to the on state. As a result, both the power transmission resonant circuit 42 and the coupling circuit 348 are set to the non-resonant state.

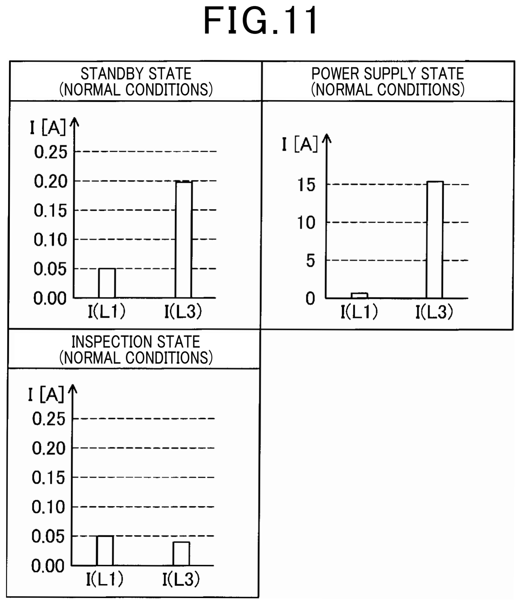

In a manner similar to that according to the second embodiment, as shown in Fig. 11, in the standby state, both the current flowing to the power transmission coil L1 and the current flowing to the tertiary coil L3 are small. In addition, in the power supply state, the current flowing to the tertiary coil L3 is greater than the current flowing to the power transmission coil L1. Furthermore, in the inspection state, because the power transmission resonant circuit 42 is set to the non-resonant state, the current flowing to the power transmission coil L1 is small in a manner similar to that in the standby state. A difference between the standby state and the inspection state is the settings of the second switch SW2 and the third switch SW3. In the standby state, both the second switch SW2 and the third switch SW3 are set to the off state. In contrast, in the inspection state, both the second switch SW2 and the third switch SW3 are set to the on state. In the inspection state, because the tertiary coil L3 is short-circuited, the current flowing to the tertiary coil L3 decreases from that in the standby state.

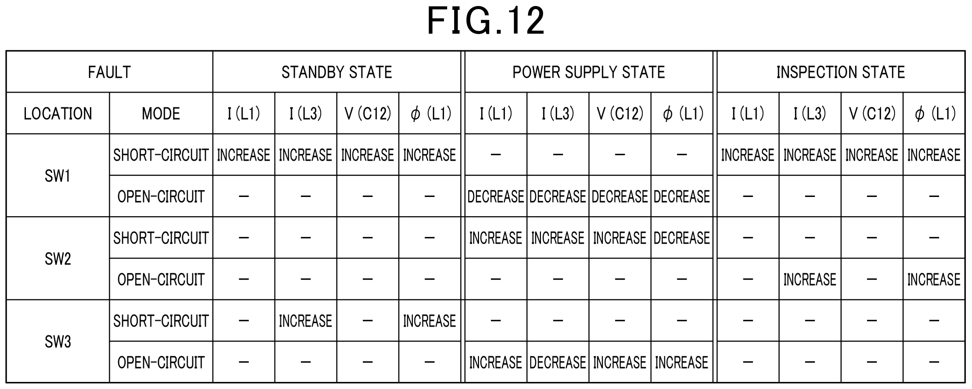

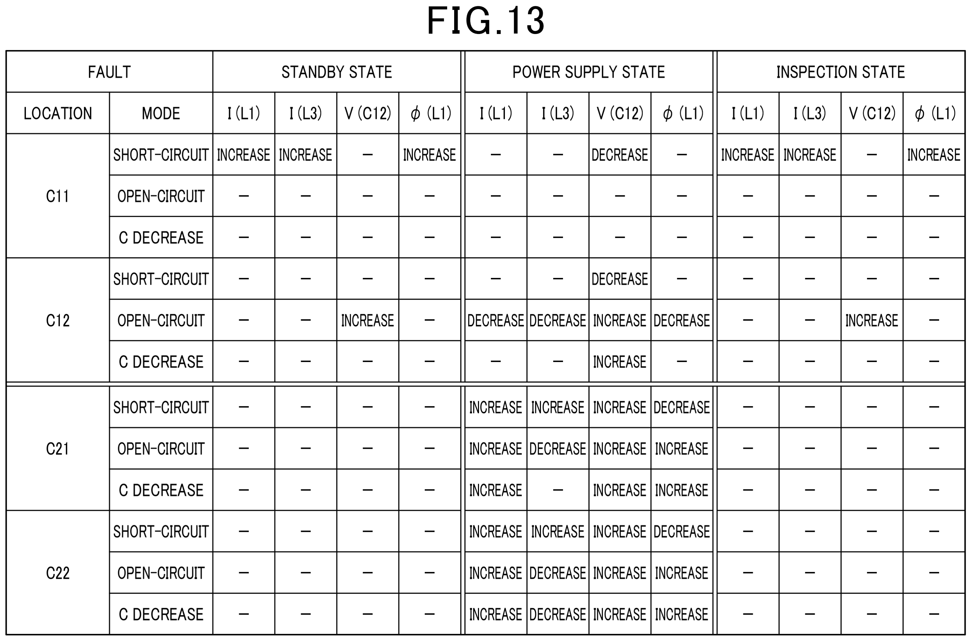

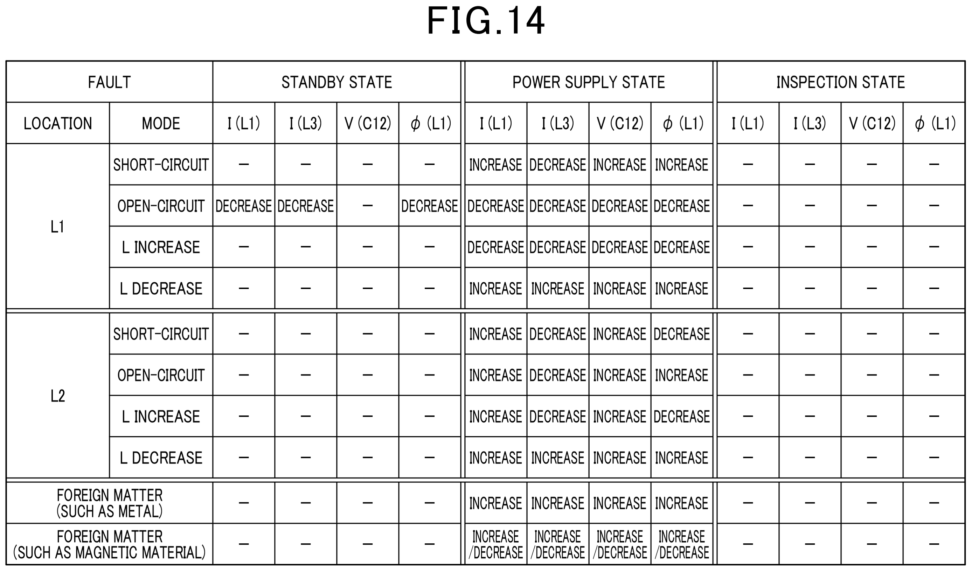

As shown in Fig. 10, when the second switch SW2 has an open-circuit fault, when the inspection state is set, a parallel resonant circuit is formed by the tertiary coil L3, the tertiary capacitor C3, and the additional capacitor C4 because the third switch SW3 is set to the on state. Therefore, as shown in Fig. 12, in the inspection state, because the power transmission coil L1 through which the standby current flows and the tertiary coil L3 are magnetically coupled, and the parallel resonant circuit enters the resonant state, the current flowing to the tertiary coil L3 increases from that under normal conditions. The open-circuit fault in the second switch SW2 can be detected in this manner. Correspondence between faults and changes in the detection values are shown in Fig. 12 to Fig. 14.

### F3. Details of the abnormality detection process

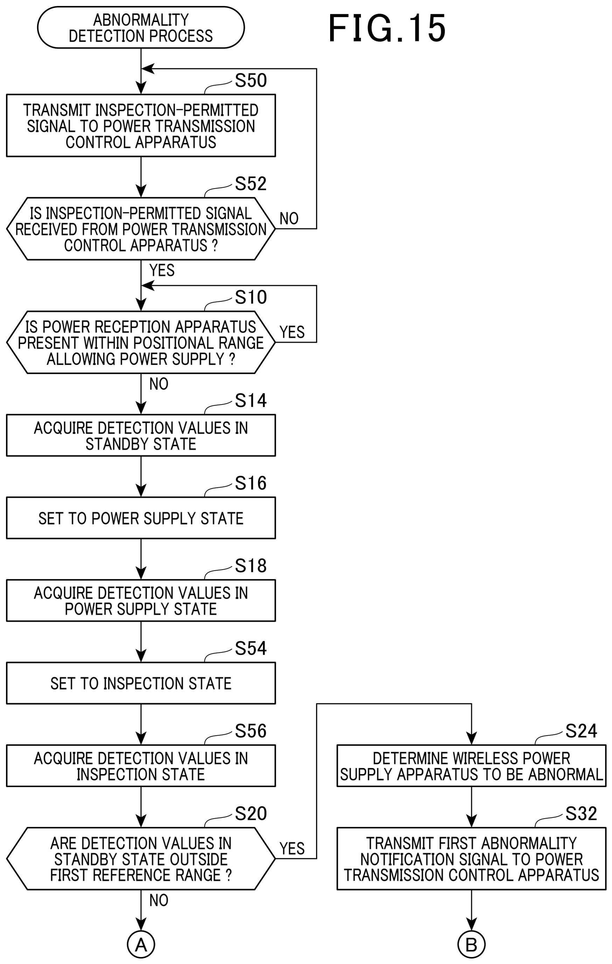

As shown in Fig. 15, at step S50, the unit-control unit 46 transmits an inspection-enabled signal to the power transmission control apparatus 60. Upon receiving the inspection-enabled signal, the power transmission control apparatus 60 transmits an inspection-permitted signal to the power transmission unit 40 so that at least two adjacent power transmission units 40 among the power transmission units 40 in the array do not perform the abnormality detection process at the same time. Specifically, the power transmission control apparatus 60 sets one power transmission unit 340 among the plurality of power transmission units 340 as a target power transmission unit that performs the abnormality determination process. According to the present embodiment, the power transmission control apparatus 60 sets the power transmission units 40 in the array to the target power transmission unit in turn, in the order of array.

In addition, after transmitting the inspection-permitted signal, the power transmission control apparatus 60 transmits a second prohibition signal to the power reception apparatus 80, the second prohibition signal prohibiting approach to the power transmission resonant circuit 42 of which the state is switched by the switching circuit 44 controlled by the unit-control unit 46 that is the transmission destination of the inspection-permitted signal. Upon receiving the second prohibition signal, the power reception-side control unit 96 does not move into a positional range prescribed in advance that is centered on the power transmission resonant circuit 42 that is the transmission destination of the inspection-permitted signal, until a permission signal is received. Specifically, for example, the power transmission control apparatus 60 may include positional information of the power transmission unit 340 including the power transmission resonant circuit 42 that is the transmission destination of the inspection-permitted signal in the second prohibition signal. The power reception-side control unit 96 stops moving or moves so as to bypass the positional range. As a result, variations in the current flowing to the power transmission coil L1 to be inspected as a result of the adjacent power transmission coil L1 generating magnetic flux can be suppressed. Furthermore, variations in the current flowing to the power transmission coil L1 to be inspected as a result of the power reception coil L2 of the power reception apparatus 80 approaching can be suppressed. Consequently, inspection accuracy can be improved.

At step S52, the unit-control unit 46 determines whether the inspection-permitted signal is received from the power transmission control apparatus 60. When determined that the inspection-permitted signal is received at step S52, the unit-control unit 46 advances the process to step S10. Meanwhile, when determined that the inspection-permitted signal is not received at step S52, the unit-control unit 46 repeatedly performs step S50 and step S52 until determined that the inspection-permitted signal is received.

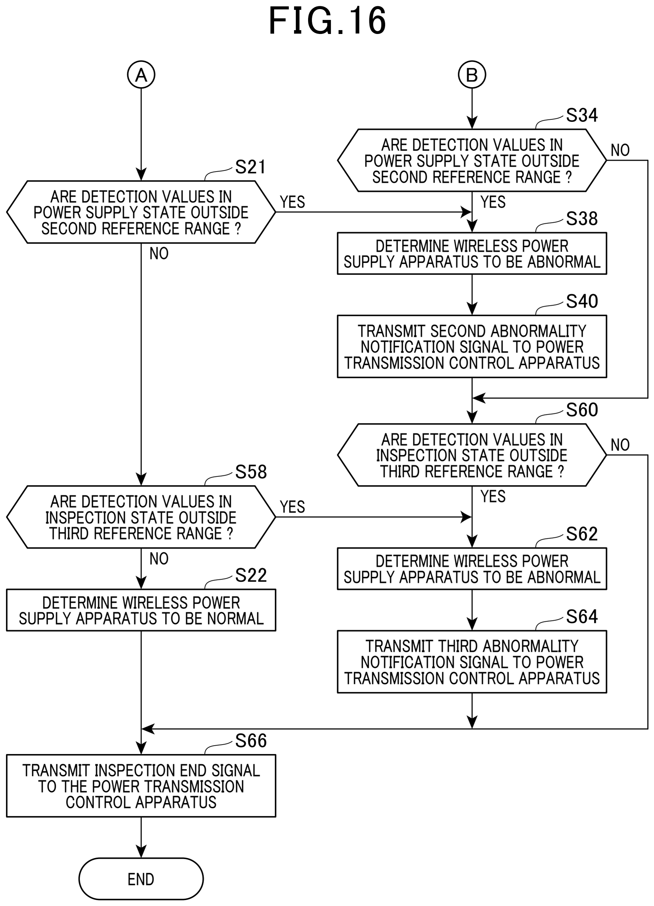

When determined that the inspection-permitted signal is received at step S52, the unit-control unit 46 performs step S10 to step S18. At step S54, the unit-control unit 46 sets the power transmission unit 340 to the inspection state. At step S56, the unit-control unit 46 acquires the detection values in the inspection state and stores the acquired detection values in the memory provided therein. At step S20, the unit-control unit 46 determines whether the detection values in the standby state are outside the first reference range. When determined that the detection values in the standby state are not outside the first reference range at step S20, at step S21 in Fig. 16, the unit-control unit 46 determines whether the detection values in the power supply state are outside the second reference range. When determined that the detection values in the power supply state are outside the second reference range at step S21, the unit-control unit 46 advances the process to step S38.

When determined that the detection values in the power supply state are not outside the second reference range at step S21, at step S58, the unit-control unit 46 determines whether the detection values in the inspection state are outside a third reference range. When determined that the detection values in the inspection state are outside the third reference range at step S58, the unit-control unit 46 advances the process to step S62. When determined that the detection values in the inspection state are not outside the third reference range at step S58, at step S22, the unit-control unit 46 determines that the power transmission unit is normal. At step S66, the unit-control unit 46 transmits an inspection end signal to the power transmission control apparatus 60 and ends the present processing routine. Upon receiving the inspection end signal, the power transmission control apparatus 60 changes the target power transmission unit.

When determined that the detection values in the standby state are outside the first reference range at step S20 in Fig. 15, at step S24, the unit-control unit 46 determines that an abnormality has occurred. At step S32, the unit-control unit 46 transmits the first abnormality notification signal to the power transmission control apparatus.

At step 34 in Fig. 16, the unit-control unit 46 determines whether the detection values in the power supply state are outside the second reference range. When determined that the detection values in the power supply state are not outside the second reference range at step S34, the unit-control unit 46 advances the process to step S60. When determined that the detection values in the power supply state are outside the second reference range at step S34, at step S38, the unit-control unit 46 determines that an abnormality has occurred. At step S40, the unit-control unit 46 transmits the second abnormality notification signal to the power transmission control apparatus 60.

At step S60, the unit-control unit 46 determines whether the detection values in the inspection state are outside the third reference range. When determined that the detection values in the inspection state are not outside the third reference range at step S60, the unit-control unit 46 advances the process to step S66. When determined that the detection values in the inspection state are outside the third reference range at step S60, at step S62, the unit-control unit 46 determines that an abnormality has occurred. At step S64, the unit-control unit 46 transmits a third or higher notification signal indicating that the detection values are outside the third reference range in the inspection state to the power transmission control apparatus 60. After performing step S64, the unit-control unit 46 advances the process to step S66.

When at least one of the first abnormality notification signal, the second abnormality notification signal, and the third abnormality signal, is received, the power transmission control apparatus 60 transmits a first prohibition signal prohibiting setting of the power transmission resonant circuit 42 to the resonant state, to the power transmission unit 340 adjacent to the power transmission unit 340 transmitting the signal. Upon receiving the first prohibition signal, the unit-control unit 46 maintains the state of the power transmission resonant circuit 42 in the non-resonant state until a permission signal is received. As a result, for example, a secondary fault can be suppressed from occurring in the power transmission unit 340 as a result of excessive generation of magnetic flux.

According to the third embodiment described above, effects similar to those according to the above-described embodiments are achieved. In addition, when at least one of the first abnormality notification signal, the second abnormality notification signal, and the third abnormality notification signal is received, the power transmission control apparatus 60 transmits the first prohibition signal to the power transmission unit 340 adjacent to the power transmission unit 340 that has sent the signal. As a result, occurrence of a secondary fault can be suppressed.

Furthermore, the power transmission control apparatus 60 sets one of the power transmission units 340 as the target power transmission unit and transmits the inspection-permitted signal to the target power transmission unit. Upon receiving the inspection-permitted signal, the power transmission unit 340 performs the abnormality determination process. As a result, two adjacent power transmission units 340 do not perform the abnormality determination process at the same time. Therefore, magnetic flux prevents interference, and accuracy of the determination of detection values can be improved.

Moreover, the unit-control unit 46 also transmits the second prohibition signal prohibiting approach to the power transmission unit 340 including the unit-control unit 46 that is the transmission destination of the inspection-permitted signal, to the power reception unit 80. As a result, magnetic coupling between the power transmission coil L1 for which the abnormality determination process is performed and the power reception coil L2 is prevented. Therefore, detection accuracy can be improved. Erroneous detection in which the power transmission unit is determined to be normal regardless of a fault having occurred, and erroneous detection in which an abnormality is determined to have occurred regardless of a fault having not occurred can be suppressed.

### G. Fourth embodiment

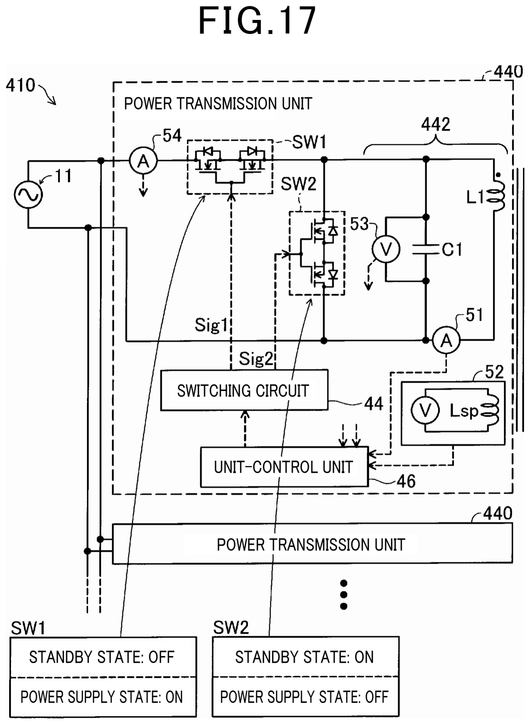

A circuit configuration of a power transmission unit 440 according to a present embodiment shown in Fig. 17 differs from those according to the above-described embodiments. Identical configurations as those according to the above-described embodiments are given the same reference numbers. Detailed descriptions thereof are omitted as appropriate.

### G1. Circuit configuration of the wireless power supply apparatus

The power transmission unit 440 includes the power transmission coil L1, the power transmission capacitor C1, the first switch SW1, and the second switch SW2. The power transmission capacitor C1 is connected in parallel to the power transmission coil L1. The first switch SW1 is connected in series to the power transmission coil L1. The second switch SW2 is connected between the first switch SW1 and the power transmission coil L1. A power transmission resonant circuit 442 is a parallel resonant circuit.

When the standby state is set, the unit-control unit 46 sets the first switch SW1 to the off state and the second switch SW2 to the on state. When the power supply state is set, the unit-control unit 46 sets the first switch SW1 to the on state and the second switch SW2 to the off state.

The second current sensor 54 is connected between the alternating-current power supply 11 and the first switch SW1, and detects an input current to the power transmission resonant circuit 442. The voltage sensor 53 detects the voltage of the power transmission capacitor C1. The first current sensor 51 and the magnetic sensor 52 are similar to those according to the above-descried first embodiment.

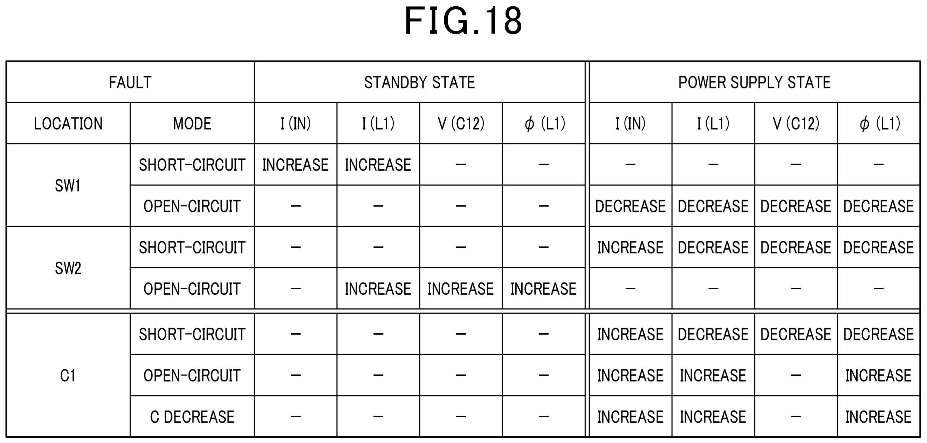

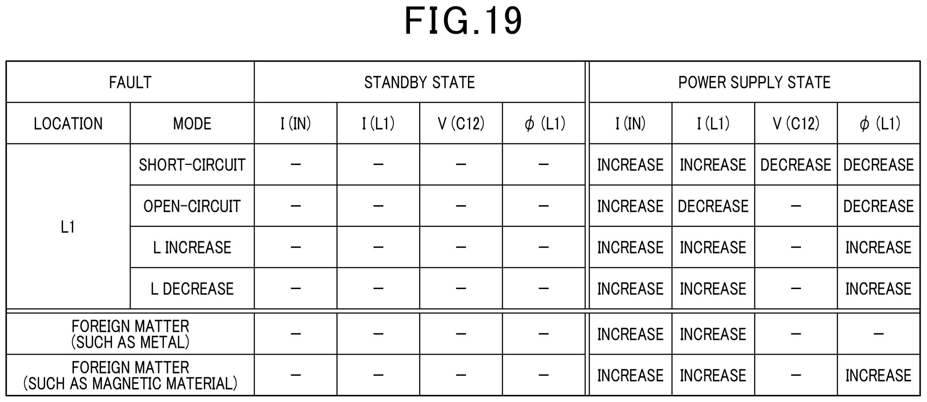

Changes in the detection values when a fault occurs are as shown in Fig. 18 and Fig. 19. In Fig. 18 and Fig. 19, "I(IN)" is the detection value of the second current sensor 54.

In the power transmission resonant circuit 442 according to the present embodiment as well, when the first switch SW1 has a short-circuit failure in the standby state, the detection value of the first current sensor 51 increases compared to that under normal conditions. Therefore, in a manner similar to that according to the first embodiment, the abnormality detection process can be performed using the detection values in the standby state.

### H. Fifth embodiment

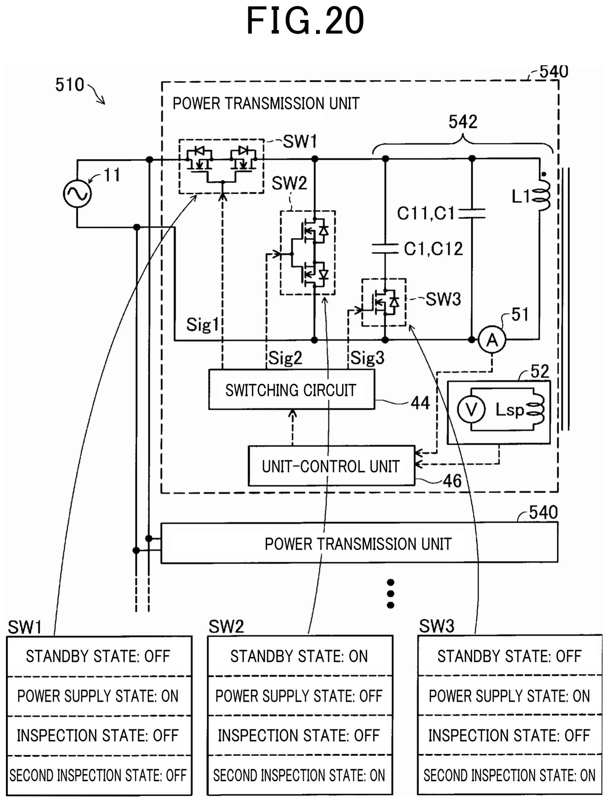

A circuit configuration of a power transmission unit 540 according to a present embodiment shown in Fig. 20 differs from those according to the above-described embodiments. Identical configurations as those according to the above-described embodiments are given the same reference numbers. Detailed descriptions thereof are omitted as appropriate.

### H1. Circuit configuration of the wireless power supply apparatus

A power transmission unit 540 includes the power transmission coil L1, the first power transmission capacitor C11, the second power transmission capacitor C12, the first switch SW1, the second switch SW2, and the third switch SW3. The first power transmission capacitor C11 is connected in parallel to the power transmission coil L1. The second power transmission capacitor C12 is connected in series to the third switch SW3. The third switch SW3 is a unidirectional switch including a single FET. A connection body of the second power transmission capacitor C12 and the third switch SW3 is connected in parallel to the power transmission coil L1. The second switch SW2 is connected in series to the power transmission coil L1. The first switch SW1 is connected in series to the power transmission coil L1. The second switch SW2, the connection body of the second power transmission capacitor C12 and the third switch SW3, and the first power transmission capacitor C11 are connected between the first switch SW1 and the power transmission coil L1.

As a result of the on/off state of the third switch SW3 being switched, the capacitance value of a power transmission resonant circuit 542 that is a parallel resonant circuit is switched.

When the standby state is set, the unit-control unit 46 sets the first switch SW1 to the off state, the second switch SW2 to the on state, and the third switch SW3 to the off state. When the power supply state is set, the first switch SW1 is set to the on state, the second switch SW2 is set to the off state, and the third switch SW3 is set to the on state. When the inspection state is set, the first switch SW1 is set to the off state, the second switch SW2 is set to the off state, and the third switch SW3 is set to the off state. When a second inspection state is set, the first switch SW1 is set to the off state, the second switch SW2 is set to the on state, and the third switch SW3 is set to the on state.

In the power transmission resonant circuit 542 according to the present embodiment as well, when the first switch SW1 or the third switch SW3 has a short-circuit fault in the standby state, the detection value of the first current sensor 51 increases compared to that under normal conditions. Therefore, in a manner similar to that according to the first embodiment, the abnormality detection process can be performed using the detection values in the standby state.

### I. Other embodiments

(I1) According to the above-described first embodiment, the unit-control unit 46 performs the abnormality detection process at startup of the power transmission unit 40. A timing at which the abnormality detection process is performed is not limited to startup of the power transmission unit 40. For example, the abnormality detection process may be performed at a timing at which the manager instructs the unit-control unit 46 to perform the abnormality detection process.

(I2) The order of step S14, step S16, and step S18 in the abnormality detection process according to the above-described second embodiment is not limited to that described above because all that is required is that the detection values in each state be acquired. In a similar manner, the order of step S20, step S21, and step S34 for determining whether an abnormality has occurred is not limited to that described above. This similarly applies to the abnormality detection process according to the third embodiment.

(13) According to the above-described first embodiment, the approach of the power reception coil L2 is detected using the magnetic sensor 52. The method of detecting the power reception coil L2 is not limited to thereto. For example, detection may be performed by a camera.

According to the above-described first embodiment, the circuit configuration is a so-called S-S circuit configuration in which the power transmission capacitor C1 is connected in series to the power transmission coil L1 in the power transmission resonant circuit 42, and the power reception capacitor C2 is connected in series to the power reception coil L2 in the power reception resonant circuit 81. The circuit configuration of the power transmission resonant circuit 42 and the circuit configuration of the power reception resonant circuit 81 are not limited to the S-S type.
(a) For example, a so-called P-S circuit configuration in which the power transmission capacitor C1 is connected in parallel to the power transmission coil L1 in the power transmission resonant circuit 42, and the power reception capacitor C2 is connected in series to the power reception coil L2 in the power reception resonant circuit 81 is also possible.
(b) In addition, a so-called P-SS circuit configuration in which a capacitor connected in parallel to the power transmission coil L1 is provided in addition to the power transmission capacitor C1 connected in series to the power transmission coil L1, and two power reception capacitors C2 are respectively connected in series to both terminals of the power reception coil L2 in the power reception resonant circuit 81 is also possible.
(c) Furthermore, a so-called SP-PS circuit configuration in which a capacitor connected in parallel to the power transmission coil L1 is provided in addition to the power transmission capacitor C1 connected in series to the power transmission coil L1, and a first power reception capacitor connected in series to the power reception coil L2 and a second power reception capacitor connected in parallel to the power reception coil 2 are provided in the power reception resonant circuit 81 is also possible.
(d) In addition, the power transmission resonant circuit 42 may also include a closed circuit in which the coil and the capacitor are connected in series. The coil of this closed circuit is disposed in a position allowing magnetic coupling with the power reception coil L2 when the power transmission coil L1 and the power reception coil L2 are magnetically coupled.
(e) Furthermore, the capacitor of the closed circuit may be connected to the coils in parallel, rather than in series.
(f) Moreover, the power transmission resonant circuit 42 may include a coil connected in series to the power transmission coil L1 and a capacitor connected in parallel to the coil. This coil is disposed in a position allowing magnetic coupling with the power reception coil L2 when the power transmission coil L1 and the power reception coil L2 are magnetically coupled.

(I5) According to the above-described first embodiment, a switching element configuring the first switch SW1 is actualized by an FET. According to another embodiment, the switching element may be actualized by another semiconductor element, such as an insulated-gate bipolar transistor (IGBT) to which a reflux diode is connected. This similarly applies to the second switch SW2 and the third switch SW3 according to the embodiments other than the first embodiment. In addition, the first switch SW1 is not limited to the bidirectional switch and may also be a unidirectional switch composed of a single switching element. The third switch SW3 may be a bidirectional switch.

(I6) According to the above-described second embodiment, the current value of the current flowing to the tertiary coil L3 is directly detected by the second current sensor 54. The method of detecting the current flowing in the tertiary coil L3 is not limited to the method using the second current sensor 54. In a manner similar to the first current sensor 51, the current flowing to the tertiary coil L3 may be indirectly detected by the voltage value of the tertiary coil L3 and the magnetic flux density near the tertiary coil L3 being detected. In a similar manner, the method of directly detecting the voltage value of the second power transmission capacitor C12 is not limited to the method using the voltage sensor 53. The voltage value of the second power transmission capacitor C12 may be indirectly detected by the current value flowing to the second power transmission capacitor C12 being detected. In addition, according to the above-described second embodiment, the power transmission unit 240 includes the first current sensor 51, the magnetic sensor 52, the voltage sensor 53, and the second current sensor 54. The power transmission unit 240 is not limited to the configuration including the four sensors that are the first current sensor 51, the magnetic sensor 52, the voltage sensor 53, and the second current sensor 54. Sensors are preferably attached depending on desired fault. For example, the power transmission unit 240 can detect a short-circuit fault in the first switch SW1 by including at least the first current sensor 51.

(I7) The coupling circuit 348 according to the above-described third embodiment includes the tertiary capacitor C3 connected in parallel to the tertiary coil L3 and the additional capacitor C4. According to another embodiment of the coupling circuit 348, the tertiary capacitor C3 may not be included. If the tertiary capacitor C3 is not included, the state of the coupling circuit 348 may be switched between the non-resonant state and the resonant state by the state of the third switch SW3 connected in series to the additional capacitor C4 being switched between the off state and the on state.

(I8) According to the above-described third embodiment, the power transmission control apparatus 60 is capable of communicating with the power reception-side control unit 96 of the power reception apparatus 80. If the communication with the power transmission control apparatus 60 at, for example, step S50 in the abnormality detection process shown in Fig. 15 is not performed, communication between the power transmission control apparatus 60 and the power reception-side control unit 96 may be made not possible.

A control unit and a method thereof described in the present disclosure may be actualized by a dedicated computer that is provided such as to be configured by a processor and a memory, the processor being programmed to provide one or a plurality of functions that are realized by a computer program. Alternatively, the control unit and a method thereof described in the present disclosure may be actualized by a dedicated computer that is provided by a processor being configured by a single dedicated hardware logic circuit or more. Still alternatively, the control unit and a method thereof described in the present disclosure may be actualized by a single dedicated computer or more. The dedicated computer may be configured by a combination of a processor that is programmed to provide one or a plurality of functions, a memory, and a processor that is configured by a single hardware logic circuit or more. In addition, the computer program may be stored in a non-transitory, tangible storage medium that can be read by a computer as instructions performed by the computer.

The present disclosure is not limited to the above-described embodiments and variation examples, and can be actualized by various configurations without departing from the spirit of the disclosure. For example, technical features according to embodiments and variation examples that correspond to technical features in each aspect described in the summary of the invention can be replaced and combined as appropriate to solve some or all of the above-described issued or to achieve some or all of the above-described effects. Furthermore, the technical features may be omitted as appropriate unless described as a requisite in the present specification.

### J. Other aspects

Characteristics of the present disclosure are as follows:

### (First aspect)

A wireless power supply apparatus (10, 210) configured to wirelessly supply power to a power reception apparatus (80) including a secondary coil (L2), the wireless power supply apparatus including: a power transmission resonant circuit (42, 442, 542) that includes a primary coil (L1) capable of being magnetically coupled with the secondary coil and a primary capacitor (C1); an alternating-current power supply (11) that supplies alternating-current power at an operating frequency prescribed in advance to the power transmission resonant circuit; a switching circuit (44) for switching a state of the power transmission resonant circuit between a resonant state and a non-resonant state; a detecting unit (51) for directly or indirectly detecting a current value of a current flowing to the primary coil; and a unit-control unit (46) that controls the switching circuit, in which the unit-control unit performs at least either of a first abnormality determination process for determining whether the wireless power supply apparatus is abnormal using a first detection value detected by the detecting unit in the non-resonant state and a second abnormality determination process for determining whether the wireless power supply apparatus is abnormal using a second detection value detected by the detecting unit in the resonant state, in the first abnormality determination process, performs a first determination step of determining whether the first detection value is outside a first reference range prescribed in advance, and performs a first abnormality determination step of determining that the wireless power supply apparatus is abnormal when determined that the first detection value is outside the first reference range at the first determination step, and in the second abnormality determination process, performs a second determination step of determining whether the second detection value is outside a second reference range prescribed in advance, and performs a second abnormality determination step of determining that the wireless power supply apparatus is abnormal when determined that the second detection value is outside the second reference range at the second determination step.

### (Second aspect)

The wireless power supply apparatus according to the first aspect, in which: in the second abnormality determination process, the unit-control unit further performs a third determination step of determining whether the second detection value is outside a circuit reference range having a greater range than the second reference range when determined that the second detection value is outside the second reference range at the second determination step, determines that a circuit abnormality has occurred when determined that the second detection value is outside the circuit reference range at the third determination step, and determines that a foreign matter abnormality has occurred when determined that the second detection value is not outside the circuit reference range at the third determination step.

### (Third aspect)

The wireless power supply apparatus according to the first aspect, further including: a power transmission control apparatus (60) that communicates with the unit-control unit, in which the unit-control unit transmits a first abnormality notification signal to the power transmission control apparatus when determined that the wireless power supply apparatus is abnormal in the first abnormality determination process, and transmits a second abnormality determination signal to the power transmission control apparatus when determined that the wireless power supply apparatus is abnormal in the second abnormality determination process.

### (Fourth aspect)

The wireless power supply apparatus according to the third aspect, further including: a plurality of power transmission units (40) including the power transmission resonant circuit, the switching circuit, the detecting unit, and the unit-control unit, in which the plurality of power transmission units are arranged in an array, and the power transmission control apparatus transmits a first prohibition signal prohibiting setting of the power transmission resonant circuit to the resonant state to the power transmission unit adjacent to the power transmission unit transmitting at least either of the first abnormality notification signal and the second abnormality notification signal, when at least either of first abnormality notification signal and the second abnormality notification signal is received.

### (Fifth aspect)

The wireless power supply apparatus according to the third aspect, further including: a plurality of power transmission units (40) including the power transmission resonant circuit, the switching circuit, the detecting unit, and the unit-control unit, in which the power transmission control apparatus sets one of the plurality of power transmission units as a target power transmission unit that performs at least either of the first abnormality determination process and the second abnormality determination process, and transmits an inspection-permitted signal to the target power transmission unit, and the target power transmission unit performs at least either of the first abnormality determination process and the second abnormality determination process when the inspection-permitted signal is received.

### (Sixth aspect)

The wireless power supply apparatus according to any of the first to fifth aspects, in which: the unit-control unit performs at least either of the first abnormality determination process and the second abnormality determination process at startup of the wireless power supply apparatus.

### (Seventh aspect)

The wireless power supply apparatus according to any of the first to sixth aspects, in which: a power reception apparatus determination step of determining whether the power reception apparatus is positioned within a positional range allowing wireless power supply is performed before at least either of the first abnormality determination process and the second abnormality determination process is performed; and at least either of the first abnormality determination process and the second abnormality determination process is performed after the power reception apparatus is determined to not be positioned at the power reception apparatus determination step.

### (Eighth aspect)

The wireless power supply apparatus according to any of the first to seventh aspects, further including: a power transmission control apparatus that communicates with the unit-control unit, in which the power transmission control apparatus transmits an inspection-permitted signal to the unit-control unit, the unit-control unit performs at least either of the first abnormality determination process and the second abnormality determination process upon receiving the inspection-permitted signal, and the power transmission control apparatus transmits, to the power reception apparatus, a second prohibition signal prohibiting approach to the power transmission resonant circuit of which the state is switched by the switching circuit controlled by the unit-control unit that is a transmission destination of the inspection-permitted signal.

### (Ninth aspect)

The wireless power supply apparatus according to any of the first to eighth aspects, in which: the primary capacitor includes a first power transmission capacitor and a second power transmission capacitor; the power transmission resonant circuit further includes a first switch that is connected in series to the second power transmission capacitor; the first power transmission capacitor is connected in series to the primary coil; a connection body of the second power transmission capacitor and the first switch is connected in parallel to the first power transmission capacitor; the detecting unit is a first current sensor that directly detects a current value of a current flowing to the primary coil; the wireless power supply apparatus further includes a coupling circuit including a tertiary coil that is capable of being magnetically coupled with the primary coil, a tertiary capacitor that is connected in parallel to the tertiary coil, and a second switch that is connected in parallel to the tertiary coil, a voltage sensor that detects a voltage of the second power transmission capacitor, a second current sensor that directly detects a current flowing to the tertiary coil, and a magnetic sensor that detects a magnitude of a magnetic flux near the primary coil, the switching circuit sets the power transmission resonant circuit to the resonant state by setting the first switch to an on state and sets the power transmission resonant circuit to the non-resonant state by setting the first switch to an off state; the unit-control unit performs, after the first abnormality determination step, a fourth determination step of determining whether a detection value of the voltage sensor is outside a first reference voltage range prescribed in advance, a fifth determination step of determining whether a detection value of the second current sensor is outside a first reference current range prescribed in advance, and a sixth determination step of determining whether a detection value of the magnetic sensor is outside a first reference magnetic-flux range prescribed in advance; and the first switch is determined to have a short-circuit fault when the detection value of the voltage sensor is determined to be outside the first reference voltage range at the fourth determination step, the detection value of the second current sensor is determined to be outside the first reference current range at the fifth determination step, and the detection value of the magnetic sensor is determined to be outside the first reference magnetic-flux range at the sixth determination step.

### (Tenth aspect)

The wireless power supply apparatus according to the ninth aspect, in which: the unit-control unit performs, after the second abnormality determination step, a seventh determination step of determining whether the detection value of the voltage sensor is outside the second reference voltage range prescribed in advance, an eighth determination step of determining whether a detection value of the second current sensor is outside a second reference current range prescribed in advance, and a ninth determination step of determining whether a detection value of the magnetic sensor is outside a second reference magnetic-flux range prescribed in advance; and the power transmission resonant circuit is determined to be faulty when the detection value of the voltage sensor is determined to be outside the second reference voltage range at the seventh determination step, the detection value of the second current sensor is determined to be outside the second reference current range at the eighth determination step, and the detection value of the magnetic sensor is determined to be outside the second reference magnetic-flux range at the ninth determination step.

### (Eleventh aspect)

The wireless power supply apparatus according to any of the first to eighth aspects, in which: the primary capacitor includes a first power transmission capacitor and a second power transmission capacitor; the power transmission resonant circuit further includes a first switch that is connected in series to the second power transmission capacitor; the first power transmission capacitor is connected in series to the primary coil; a connection body of the second power transmission capacitor and the first switch is connected in parallel to the first power transmission capacitor; the wireless power supply apparatus further includes a coupling circuit including a tertiary coil that is capable of being magnetically coupled with the primary coil, a tertiary capacitor that is connected in parallel to the tertiary coil, a second switch that is connected in parallel to the tertiary coil, an additional capacitor, and a third switch that is connected in series to the additional capacitor; a connection body of the additional capacitor and the third switch is connected in parallel to the tertiary coil; the detecting unit is a first current sensor that directly detects a current value of a current flowing to the primary coil; and the switching circuit sets the power transmission resonant circuit to the resonant state by setting the first switch and the third switch to an on state and the second switch to an off state, and sets the power transmission resonant circuit to the non-resonant state by setting the first switch, the second switch, and the third switch to the off state.

### (Twelfth aspect)

The wireless power supply apparatus according to any of the first to eleventh aspects, in which: the power transmission resonant circuit further includes (i) a first switch that is connected in series to the primary coil, and (ii) a second switch that is connected in parallel to the primary coil between the primary coil and the first switch; the detecting unit is a first current sensor that directly detects a current value of a current flowing to the primary coil; and the switching circuit sets the power transmission resonant circuit to the resonant state by setting the first switch to an on state and the second switch to an off state, and sets the power transmission resonant circuit to the non-resonant state by setting the first switch to the off state and the second switch to the on state.

## Claims

1. A wireless power supply apparatus (10, 210) configured to wirelessly supply power to a power reception apparatus (80) including a secondary coil (L2), the wireless power supply apparatus comprising:
a power transmission resonant circuit (42, 442, 542) that includes a primary coil (Ll) capable of being magnetically coupled with the secondary coil and a primary capacitor (C1);
an alternating-current power supply (11) that supplies alternating-current power at an operating frequency prescribed in advance to the power transmission resonant circuit;
a switching circuit (44) for switching a state of the power transmission resonant circuit between a resonant state and a non-resonant state;
a detecting unit (51) for directly or indirectly detecting a current value of a current flowing to the primary coil; and
a unit-control unit (46) that controls the switching circuit, wherein
the unit-control unit
performs at least either of a first abnormality determination process for determining whether the wireless power supply apparatus is abnormal using a first detection value detected by the detecting unit in the non-resonant state, and a second abnormality determination process for determining whether the wireless power supply apparatus is abnormal using a second detection value detected by the detecting unit in the resonant state,
in the first abnormality determination process, performs a first determination step of determining whether the first detection value is outside a first reference range prescribed in advance, and performs a first abnormality determination step of determining that the wireless power supply apparatus is abnormal when determined that the first detection value is outside the first reference range at the first determination step, and
in the second abnormality determination process, performs a second determination step of determining whether the second detection value is outside a second reference range prescribed in advance, and performs a second abnormality determination step of determining that the wireless power supply apparatus is abnormal when determined that the second detection value is outside the second reference range at the second determination step.

2. The wireless power supply apparatus according to claim 1, wherein:
in the second abnormality determination process, the unit-control unit
further performs a third determination step of determining whether the second detection value is outside a circuit reference range having a greater range than the second reference range when determined that the second detection value is outside the second reference range at the second determination step, determines that a circuit abnormality has occurred when determined that the second detection value is outside the circuit reference range at the third determination step, and determines that a foreign matter abnormality has occurred when determined that the second detection value is not outside the circuit reference range at the third determination step.

3. The wireless power supply apparatus according to claim 1, further comprising:
a power transmission control apparatus (60) that communicates with the unit-control unit, wherein
the unit-control unit transmits a first abnormality notification signal to the power transmission control apparatus when determined that the wireless power supply apparatus is abnormal in the first abnormality determination process, and transmits a second abnormality determination signal to the power transmission control apparatus when determined that the wireless power supply apparatus is abnormal in the second abnormality determination process.

4. The wireless power supply apparatus according to claim 3, further comprising:
a plurality of power transmission units (40) including the power transmission resonant circuit, the switching circuit, the detecting unit, and the unit-control unit, wherein
the plurality of power transmission units are arranged in an array, and
the power transmission control apparatus
transmits a first prohibition signal prohibiting setting of the power transmission resonant circuit to the resonant state to the power transmission unit adjacent to the power transmission unit transmitting at least either of the first abnormality notification signal and the second abnormality notification signal, when at least either of first abnormality notification signal and the second abnormality notification signal is received.

5. The wireless power supply apparatus according to claim 3, further comprising:
a plurality of power transmission units (40) including the power transmission resonant circuit, the switching circuit, the detecting unit, and the unit-control unit, wherein
the power transmission control apparatus
sets one of the plurality of power transmission units as a target power transmission unit that performs at least either of the first abnormality determination process and the second abnormality determination process, and
transmits an inspection-permitted signal to the target power transmission unit, and
the target power transmission unit performs at least either of the first abnormality determination process and the second abnormality determination process when the inspection-permitted signal is received.

6. The wireless power supply apparatus according to claim 1, wherein:
the unit-control unit performs at least either of the first abnormality determination process and the second abnormality determination process at startup of the wireless power supply apparatus.

7. The wireless power supply apparatus according to claim 1, wherein:
a power reception apparatus determination step of determining whether the power reception apparatus is positioned within a positional range allowing wireless power supply is performed before at least either of the first abnormality determination process and the second abnormality determination process is performed; and
at least either of the first abnormality determination process and the second abnormality determination process is performed after the power reception apparatus is determined to not be positioned at the power reception apparatus determination step.

8. The wireless power supply apparatus according to claim 1, further comprising:
a power transmission control apparatus that communicates with the unit-control unit, wherein
the power transmission control apparatus transmits an inspection-permitted signal to the unit-control unit,
the unit-control unit performs at least either of the first abnormality determination process and the second abnormality determination process upon receiving the inspection-permitted signal, and
the power transmission control apparatus transmits, to the power reception apparatus, a second prohibition signal prohibiting approach to the power transmission resonant circuit of which the state is switched by the switching circuit controlled by the unit-control unit that is a transmission destination of the inspection-permitted signal.

9. The wireless power supply apparatus according to claim 1, wherein:
the primary capacitor includes a first power transmission capacitor and a second power transmission capacitor;
the power transmission resonant circuit further includes a first switch that is connected in series to the second power transmission capacitor;
the first power transmission capacitor is connected in series to the primary coil;
a connection body of the second power transmission capacitor and the first switch is connected in parallel to the first power transmission capacitor;
the detecting unit is a first current sensor that directly detects a current value of a current flowing to the primary coil;
the wireless power supply apparatus further includes
a coupling circuit including a tertiary coil that is capable of being magnetically coupled with the primary coil, a tertiary capacitor that is connected in parallel to the tertiary coil, and a second switch that is connected in parallel to the tertiary coil,
a voltage sensor that detects a voltage of the second power transmission capacitor,
a second current sensor that directly detects a current flowing to the tertiary coil, and
a magnetic sensor that detects a magnitude of a magnetic flux near the primary coil,
the switching circuit sets the power transmission resonant circuit to the resonant state by setting the first switch to an on state and sets the power transmission resonant circuit to the non-resonant state by setting the first switch to an off state;
the unit-control unit performs, after the first abnormality determination step, a fourth determination step of determining whether a detection value of the voltage sensor is outside a first reference voltage range prescribed in advance, a fifth determination step of determining whether a detection value of the second current sensor is outside a first reference current range prescribed in advance, and a sixth determination step of determining whether a detection value of the magnetic sensor is outside a first reference magnetic-flux range prescribed in advance; and
the first switch is determined to have a short-circuit fault when the detection value of the voltage sensor is determined to be outside the first reference voltage range at the fourth determination step, the detection value of the second current sensor is determined to be outside the first reference current range at the fifth determination step, and the detection value of the magnetic sensor is determined to be outside the first reference magnetic-flux range at the sixth determination step.

10. The wireless power supply apparatus according to claim 9, wherein:
the unit-control unit performs, after the second abnormality determination step, a seventh determination step of determining whether the detection value of the voltage sensor is outside the second reference voltage range prescribed in advance, an eighth determination step of determining whether a detection value of the second current sensor is outside a second reference current range prescribed in advance, and a ninth determination step of determining whether a detection value of the magnetic sensor is outside a second reference magnetic-flux range prescribed in advance; and
the power transmission resonant circuit is determined to be faulty when the detection value of the voltage sensor is determined to be outside the second reference voltage range at the seventh determination step, the detection value of the second current sensor is determined to be outside the second reference current range at the eighth determination step, and the detection value of the magnetic sensor is determined to be outside the second reference magnetic-flux range at the ninth determination step.

11. The wireless power supply apparatus according to claim 1, wherein:
the primary capacitor includes a first power transmission capacitor and a second power transmission capacitor;
the power transmission resonant circuit further includes a first switch that is connected in series to the second power transmission capacitor;
the first power transmission capacitor is connected in series to the primary coil;
a connection body of the second power transmission capacitor and the first switch is connected in parallel to the first power transmission capacitor;
the wireless power supply apparatus further includes a coupling circuit including a tertiary coil that is capable of being magnetically coupled with the primary coil, a tertiary capacitor that is connected in parallel to the tertiary coil, a second switch that is connected in parallel to the tertiary coil, an additional capacitor, and a third switch that is connected in series to the additional capacitor;
a connection body of the additional capacitor and the third switch is connected in parallel to the tertiary coil;
the detecting unit is a first current sensor that directly detects a current value of a current flowing to the primary coil; and
the switching circuit sets the power transmission resonant circuit to the resonant state by setting the first switch and the third switch to an on state and the second switch to an off state, and sets the power transmission resonant circuit to the non-resonant state by setting the first switch, the second switch, and the third switch to the off state.

12. The wireless power supply apparatus according to claim 1, wherein:
the power transmission resonant circuit further includes (i) a first switch that is connected in series to the primary coil, and (ii) a second switch that is connected in parallel to the primary coil between the primary coil and the first switch;
the detecting unit is a first current sensor that directly detects a current value of a current flowing to the primary coil; and
the switching circuit sets the power transmission resonant circuit to the resonant state by setting the first switch to an on state and the second switch to an off state, and sets the power transmission resonant circuit to the non-resonant state by setting the first switch to the off state and the second switch to the on state.
